(19) Europäisches Patentamt
European Patent Office
Office européen des brevets

(11) Veröffentlichungsnummer: **0 083 308**
**B2**

(12) # NEUE EUROPÄISCHE PATENTSCHRIFT

(45) Veröffentlichungstag der neuen Patentschrift: **24.10.90**

(21) Anmeldenummer: **82810557.7**

(22) Anmeldetag: **20.12.82**

(51) Int. Cl.⁵: **A 01 N 25/28**, B 27 K 3/50, C 09 D 5/14 // (A01N25/22, 59:18, 59:20, 59:22, 47:10, 43:80, 43:40, 41:02, 37:34, 37:32, 31:10)

(54) **Verfahren zum Stabilisieren von Fungiciden.**

(30) Priorität: **24.12.81 US 334197**

(43) Veröffentlichungstag der Anmeldung: **06.07.83 Patentblatt 83/27**

(45) Bekanntmachung des Hinweises auf die Patenterteilung: **05.03.86 Patenblatt 86/10**

(45) Bekanntmachung des Hinweises auf die Entscheidung über den Einspruch: **24.10.90 Patentblatt 90/43**

(84) Benannte Vertragsstaaten: **BE DE FR GB IT NL SE**

(56) Entgegenhaltungen:
**EP-A-0 002 753**
**EP-A-0 033 663**
**EP-B-0 006 213**
**EP-B-0 016 723**
**EP-B-0 055 216**
**DE-A-2 721 292**
**GB-A-1 433 285**
**JP-A-5 130 258**
**JP-A-5 222 029**
**JP-A-5 251 427**
**US-A-3 393 990**
**US-A-3 467 661**
**US-A-4 243 792**
**US-A-4 276 211**
**US-A-4 278 590**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Gabriele, Peter D.**
**21 Westview Drive**
**Danbury Connecticut 06810 (US)**
Erfinder: **Rademan, Jerry E.**
**166 Gatto Lane**
**Pearl River New York 10965 (US)**

(74) Vertreter: **Zumstein, Fritz, Dr. et al**
**Dr. F. Zumstein sen Dr. E. Assman Dipl.-Ing. F. Klingseisen Dr. F. Zumstein jun.**
**Bräuhausstrasse 4**
**D-8000 München 2 (DE)**

(56) Entgegenhaltungen:
**Enninga/Bordes, Fungicides in Latex Paints, Billiton M & T Chemische Industrie N.V., S. 326-332**

**Patel/Usilton, Ultraviolet Stabilization of Polymers: Development with Hindered-Amine Light Stabilizers, American Chemical Society, 1978, S. 116-132**

**CIBA-GEIGY Provisorische Technische Information Tinuvin 770**
**Gysling, Antioxidantien und UV-Stabilisatoren, Kunststoffe 66 (1976), S. 670-674**

**EP 0 083 308 B2**

(56) Entgegenhaltungen:
**CIBA-GEIGY Tinuvin 770 in Automobillacken**
**Gabriele/Iannucci, Protection of Mildewcides and Fungicides From Ultraviolet Light Induced Photo-oxidation, Journal of Coatings Technology, Vol. 56, No. 712, Mai 1984, S. 33-48**

**Beschreibung**

Die Erfindung betrifft ein Verfahren zum Stabilisieren von Fungiciden in Holzschutzanstrichen gegen photochemischen Abbau durch Zusatz von Lichtschutzmitteln. Es handelt sich hierbei um Lichtschutzmittel aus der Klasse der 2,2,6,6-Tetramethylpiperidine sowie um deren Mischungen mit UV-Absorbern.

Die Verwendung von Fungiciden zum Schutz von natürlichen und synthetischen organischen Materialien gegen mikrobiologische Zerstörung im Freien ist weitverbreitet. Alle organischen Materialien sind potentielle Kohlenstoff-Lieferanten für biologische Assimilation. Fungicide werden vielfach in Landwirtschaft, Chemie und Polymer-Technologie eingesetzt, um organische Materialien zu schützen, die entweder im Freien wachsen oder für die eine Verlängerung der Verwendbarkeit im Ausseneinsatz angestrebt ist. Versagt das Fungicid, so resultiert dies in mikrobiologischem Befall. Die Mikroorganismen verderben und zerstören das organische Material durch enzymatischen Angriff. Die Rolle des Fungicides ist es, eine Umgebung zu schaffen, in der die Pilze nicht mehr weiterleben können. Eine solche fungitoxische Umgebung muss für die organischen Materialien im Ausseneinsatz aufrechterhalten werden um sie frei von Pilzbefall zu halten.

Die meisten organischen Fungicide sind empfindlich gegen Sonnenlicht und zersetzen sich bei Bestrahlung. Viele organische und metallorganische Fungicide sind UV-Absorber mit einer oder mehreren lichtempfindlichen Bindungen. Solche Photozersetzungen von Fungiciden sind ein wesentlicher Faktor für den Wirkungsabfall eines Fungicides während seiner Anwendung. Bei der Formulierung von Fungiciden werden heute daher die Verluste durch Auswandern und natürliche Bewitterung berücksichtigt. Die Wirksamkeit eines Fungicides hängt daher von der Aufrechterhaltung einer minimalen Hemmkonzentration (minimum inhibitory concentration = MIC) über einen bestimmten Zeitraum ab. Dies wird als der Wirkungsgrad (efficacy) eines Systems bezeichnet.

Die minimale Hemmkonzentration wird ergänzt durch das Konzept geformter Angriffspunkte («shaped-charge», J. G. Horsfall, Principles of Fungicidal Action, Chronica Botanica Comp., 1956, 67—73). Ein Fungicid ist nur dann wirksam, wenn seine molekulare Struktur beim Kontakt mit dem Pilz erhalten bleibt. Das Konzept der geformten Angriffspunkte besagt, dass das Fungicid-Molekül mindestens zwei aktive Zentren hat. Eines davon ermöglicht die Passage durch die Zellwand des Pilzes. Das andere, das toxaphore oder Gift-Zentrum, ist für die eigentliche Tötung des Pilzes verantwortlich. Lichtabbau zerstört diese aktiven Zentren und damit das Konzept der geformten Angriffspunkte, wodurch das Fungicid wirkungslos wird.

Photochemische Zersetzung reduziert nicht nur die Wirksamkeit eines Fungicides durch Zerstörung der geformten Angriffspunkte, sondern kann auch flüchtige Spaltprodukte erzeugen, die für Pflanzen oder Tiere giftig sind und so die Umwelt gefährden. Es ist daher wünschenswert, den Abbau des Fungicides bei UV-Bestrahlung zu verhindern oder wenigstens zu reduzieren. Eine eingehendere information über die Einwirkung von UV-Licht auf die Wirksamkeit von Fungiciden ist zu finden in R. Enninga, W. J. Border, «Fungicides in Latex Paints», Biodeterioration of Materials, Proceedings of 1st International Biodeterioration Symposium, Elsevier Publishing Co., 1968, 326—332.

Zur Ueberwindung dieses Problems sind bisher im allgemeinen zwei Methoden angewendet worden. Die erste besteht darin, in der Formulierung die Dosis des Fungicides zu erhöhen und damit die Verluste im Laufe der Verwendung zu kompensieren. Die zweite besteht in der physikalischen Abschirmung der UV-Strahlen des Sonnenlichtes. Die Nachteile der ersten Methode sind einmal erhöhte Kosten und zum andernmal erhöhte Gefahr für Warmblütler. Eine hohe Dosierung des Fungicides über die MIC hinaus ist daher wirtschaftlich und ökologisch unerwünscht. Bei der zweiten Methode werden üblicherweise Pigmente zugesetzt. Diese haben den Nachteil einer geringeren Löslichkeit, sie neigen zum Auskreiden und verspröden das Material. In manchen Fällen können Pigmente sogar Photozersetzungen initiieren. Daher ist auch dieser Weg nicht befriedigend.

Es wurde in der US-PS 3 393 990 bereits vorgeschlagen. Fungizide durch den Zusatz von polymeren Derivaten von UV-Absorbern gegen Lichtabbau zu stabilisieren. Hierbei benötigt man jedoch relativ grosse Mengen an aufwendig herzustellenden Zusätzen.

Die vorliegende Erfindung löst dieses Problem durch Zusatz eines Lichtschutzmittels vom Typ der sterisch gehinderten Amine zu den Fungiciden bzw. zu den fungiciden Formulierungen.

Die vorliegende Erfindung betrifft ein Verfahren zum Stabilisieren gegen Lichtabbau von organischen Fungiciden in Holzschutzanstrichen durch Zusatz mindestens einer 2,2,6,6-Tetramethylpiperidinverbindung oder deren Mischung mit mindestens einem UV-Absorber, wobei das Fungicid kein fungizider Weichmacher und keine 2,2,6,6,-Tetraalkylpiperidinverbindung ist.

Die Verwendung solcher Stabilisatoren vermeidet die Nachteile der bekannten Problemlösungen. Der Chemismus und die Löslichkeit der erfindungsgemäss verwendeten Stabilisatoren erleichtern ihre Einarbeitung in fungicide Formulierungen un steigern ihre Schutzwirkung gegen Abbau des Fungicides und gegen die damit verbundene Reduktion der fungiciden Wirkung. Die zugesetzten Piperidinverbindungen vermögen freie Radikale abzufangen und vermeiden dadurch, dass diese das Fungicid angreifen können. Zusätzliche UV-Absorber schirmen das UV-Licht ab und schützen damit ebenfalls das Fungicid.

Die Kombination beider Stabilisatortypen hat daher den Vorteil eines doppelten Schutzmechanismus. Die hohe Stabilisatoraktivität dieser Lichtschutzmittel erlaubt eine Herabsetzung der Fungicid-Dosis, die für

eine befriedigende Wirkung nötigt ist, und vermeidet dadurch die erwähnten ökologischen und ökonomischen Nachteile bisheriger Methoden.

Die als Stabilisator verwendeten Piperidinverbindungen und UV-Absorber sowie deren Gemische sind bekannte Verbindungen, die als Lichtschutzmittel für Kunststoffe und Lacke bekannt sind, wie dies beispielsweise in den US-PS 4 110 304, 4 283 327, 4 344 876, 4 314 933 oder in der EP-A 2753 beschrieben ist.

Die erfindungsgemäss verwendbaren 2,2,6,6-Tetramethylpiperidin-Verbindungen sind allgemein bekannt ebenso wie ihre Eignung als Lichtschutzmittel. Die US-Patentschriften 3 542 729, 3 640 928, 3 840 494, 4 021 432, 4 049 647, 4 064 102, 4 086 204 und 4 265 805 sind typische Beispiele für zahlreiche Patente, in denen solche Piperidin-Lichtschutzmittel beschrieben sind.

Vorzugsweise handelt es sich dabei um Verbindungen, die eine Gruppe der Formel (I) enthalten.

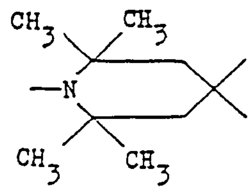

(I)

Zu den erfindungsgemäss zu verwendenden Piperidin-Verbindungen gehören insbesondere folgende Verbnindungsklassen:

a) Lichtschutzmittel der Formel (II),

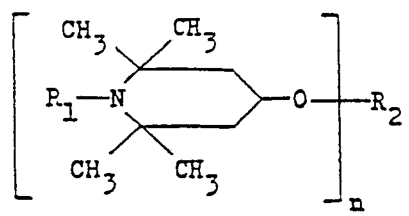

(II)

worin n eine Zahl von 1 bis 4, vorzugsweise 1 oder 2 bedeutet. $R_1$ Wasserstoff, Oxyl, $C_1$—$C_{18}$ Alkyl, $C_3$—$C_8$ Alkenyl, $C_3$—$C_8$ Alkinyl, $C_7$—$C_{12}$ Aralkyl, $C_1$—$C_8$ Alkanoyl, $C_3$—$C_5$ Alkenoyl, Glycidyl oder eine Gruppe —$CH_2CH(OH)$—Z, worin Z Wasserstoff, Methyl oder Phenyl ist, bedeutet, wobei $R_1$ vorzugsweise Wasserstoff, $C_1$—$C_{12}$ Alkyl, Allyl, Benzyl, Acetyl oder Acryloyl ist und $R_2$, wenn n = 1, Wasserstoff, gegebenenfalls durch ein oder mehrere Sauerstoffatome unterbrochenes $C_1$—$C_{18}$ Alkyl, Cyanethyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, oder einer aromatischen Carbonsäure mit 7 bis 15 C-Atomen bedeutet, wenn n = 2, $C_1$—$C_{12}$ Alkylen, $C_4$—$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 bis 14 C-Atomen oder einer aliphatischen, cycloaliphatischen oder aromatischen Dicarbaminsäure mit 8—14 C-Atomen bedeutet, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n = 4, einen vierwertigen Rest einer aliphatischen, cycloaliphatischen oder aromatischen Tetracarbonsäure bedeutet.

Bedeuten etwaige Substituenten $C_1$—$C_{12}$ Alkyl, so stellen sie z.B. Methyl, Ethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

In der Bedeutung von $C_1$—$C_{18}$ Alkyl können $R_1$ oder $R_2$ z.B. die oben angeführten Gruppen und dazu noch beispielsweise n-Tridecyl, n-Tetradecyl, n-Hexadecyl oder n-Octadecyl darstellen.

Wenn $R_1$ $C_3$—$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R_1$ ist als $C_3$—$C_8$ Alkinyl bevorzugt Propargyl.

Als $C_7$—$C_{12}$ Aralkyl ist $R_1$ insbesondere Phenethyl oder vor allem Benzyl.

$R_1$ ist als $C_1$—$C_8$ Alkanoyl beispielsweise Formel, Propionyl, Butyryl, Octanoyl, aber bevorzugt Acetyl und als $C_3$—$C_5$ Alkenoyl insbesondere Acryloyl.

Bedeutet $R_2$ einen einwertigen Rest einer Carbonsäure, so stellt es beispielsweise einen Essigsäure-, Stearinsäure-, Salicylsäure-, Methacrylsäure-, Benzoe- oder β-(3,5-Di-tert.-butyl-4-hydroxyphenyl)-propionsäurerest dar.

Bedeutet $R_2$ einen zweiwertigen Rest einer Dicarbonsäure, so stellt es beispielsweise einen Adipinsäure-, Suberinsäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R_2$ einen dreiwertigen Rest einer Tricarbonsäure dar, so bedeutet es z.B. einen Trimellithsäure- oder einen Nitrilotriessigsäurerest.

Stellt $R_2$ einen vierwertigen Rest einer Tetracarbonsäure dar, so bedeutet es z.B. den vierwertigen Rest von Butan-1,2,3,4-tetracarbonsäure oder von Pyromellithsäure.

Bedeutet $R_2$ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Tetramethylpiperidin-Lichtschutzmittel dieser Klasse sind folgende Verbindungen:

1) 4-Hydroxy-2,2,6,6-tetramethylpiperidin
2) 1-Allyl-4-hydroxy-2,2,6,6,-tetramethylpiperidin
3) 1-Benzyl-4-hydroxy-2,2,6,6,-tetramethylpiperidin
4) 1-(4-tert.-Butyl-2-butenyl)-4-hydroxy-2,2,6,6,-tetramethylpiperidin
5) 4-Stearoyloxy-2,2,6,6-tetramethylpiperidin
6) 1-Ethyl-4-salicyloyloxy-2,2,6,6-tetramethylpiperidin
7) 3-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(2,2,6,6-tetramethylpiperidin-4-yl)-maleinat
10) Di-(2,2,6,6-tetramethylpiperidin-4-yl)-adipat
11) Di-(2,2,6,6-tetramethylpiperidin-4-yl)-sebacat
12) Di-(1,2,3,6-tetramethyl-2,6-diethyl-piperidin-4-yl)-sebacat
13) Di-(1-allyl-2,2,6,6-tetramethylpiperidin-4-yl)-phthalat
14) 1-Propargyl-4-β-cyanoethyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)ester
20) Dibenzyl-malonsäure-di-(1,2,6,6-pentamethylpiperidin-4-yl)-ester
21) Dibenzyl-malonsäure-di-(1,2,3,6-tetramethyl-2,6-diethylpiperidin-4-yl)-ester
22) Hexan-1',6'-bis-(4-carbamoyloxy-1-n-butyl-2,2,6,6-tetramethylpiperidin)
23) Toluol-2',4'-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)-phosphat
28) Phenyl-[bis-(1,2,2,6,6-pentamethylpiperidin-4-yl)-phosphonat
29) Bis-(1,2,2,6,6-pentamethylpiperidin-4-yl)-sebacat

b) Lichtschutzmittel der Formel (III),

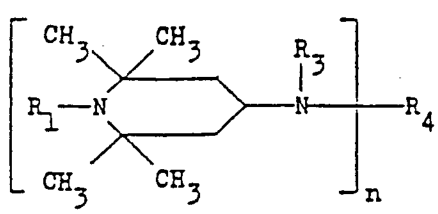

(III)

worin n die Zahl 1 oder 2 bedeutet, $R_1$ die unter a) angegebene Bedeutung hat, $R_3$ Wasserstoff, $C_1$—$C_{12}$ Alkyl, $C_2$—$C_5$ Hydroxyalkyl, $C_5$—$C_7$ Cycloalkyl, $C_7$—$C_8$ Aralkyl, $C_2$—$C_{18}$ Alkanoyl, $C_3$—$C_5$ Alkenoyl oder Benzoyl ist und $R_4$ wenn n = 1, Wasserstoff, $C_1$—$C_{18}$ Alkyl, $C_3$—$C_8$ Alkenyl, $C_5$—$C_7$ Cycloalkyl, mit einer Hydroxy-, Cyano-, Alkoxycarbonyl- oder Carbamidgruppe substituiertes $C_1$—$C_4$ Alkyl, Glycidyl, eine Gruppe der Formel —$CH_2$—CH(OH)—Z oder der Formel —CONH—Z ist, worin Z Wasserstoff, Methyl oder Phenyl bedeutet; wenn n = 2, $C_2$—$C_{12}$ alkylen, $C_6$—$C_{12}$ Arylen, Xylylen, eine —$CH_2$—CH(OH)—$CH_2$-Gruppe, oder eine Gruppe —$CH_2$—CH(OH)—$CH_2$—O—X—O—$CH_2$—CH(OH)—$CH_2$— bedeutet, worin X $C_2$—$C_{10}$ Alkylen $C_6$—$C_{15}$ Arylen, $C_6$—$C_{12}$ Cycloalkylen ist, oder vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure oder auch die Gruppe —CO— bedeuten kann, oder $R_3$ und $R_4$ zusammen, wenn n = 1, den zweiweritigen Rest einer aliphatischen, cycloaliphatischen oder aromatischen 1,2- oder 1,3-Dicarbonsäure bedeuten können.

Stellen etwaige Substiuenten $C_1$—$C_{12}$ oder $C_1$—$C_{18}$ Alkyl dar, so haben sie die bereits (unter a) angegebene Bedeutung.

Bedeuten etwaige Substituenten $C_5$—$C_7$ Cycloalkyl, stellen sie insbesondere Cyclohexyl dar.

Als $C_7$—$C_8$ Aralkyl ist $R_3$ insbesondere Phenylethyl oder vor allem Benzyl.

$R_3$ ist als $C_2$—$C_{18}$ Alkanoyl beispielsweise Propionyl, Butyril, Octanoyl, Dodecanoyl, Hexadecanoyl, Octadecanoyl, aber bevorzugt Acetyl und als $C_3$—$C_5$ Alkenoyl insbesondere Acryloyl.

Bedeutet $R_4$ $C_2$—$C_8$ Alkenyl, dann handelt est sich z.B. um Allyl, Methallyl, 2-Butenyl, 2-Pentenyl, 2-Hexenyl oder 2-Octenyl.

$R_4$ als mit einer Hydroxy-, Cyano-, Alkoxycarbamidgruppe substituiertes $C_2$—$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$—$C_{12}$ Alkylen dar, so handelt es sich z.B. um Ethylen, Propylen, 2,2-Dimethylpropylen, Tetramethylen,

Hexamethylen, Octamethylen, Decamethylen oder Dodecamethylen.

Bedeuten etwaige Substituenten $C_6$—$C_{15}$ Arylen, so stellen sie z.B. o-, m- oder p-Phenylen, 1,4-Naphthylen oder 4,4'-Diphenylen dar.

Als $C_6$—$C_{12}$ Cycloalkylen ist X insbesondere Cyclohexylen.

Beispiele für Tetramethylpiperidin-Lichtschutzmittel dieser Klasse sind folgende Verbindungen:

30) N,N'-Bis-(2,2,6,6-tetramethylpiperidin-4-yl)-hexamethylen-1,6-diamin
31) N,N'-Bis-(2,2,6,6-tetramethylpiperidin-4-yl)-hexamethylen-1,6-diacetamid
32) 1-Acetyl-4-(N-cyclohexylacetamido)-2,2,6,6-tetramethylpiperidin
33) 4-Benzylamino-2,2,6,6-tetramethylpiperidin
34) N,N'-Bis-(2,2,6,6-tetramethylpiperidin-4-yl)-N,N'-dibutyladipamid
35) N,N'-Bis-(2,2,6,6-tetramethylpiperidin-4-yl)-N,N'-dicyclohexyl-2-hydroxypropylen-1,3-diamin
36) N,N'-Bis-(2,2,6,6-tetramethylpiperidin-4-yl)-p-xylylen-diamin
38) 4-(Bis-2-hydroxyäthyl-amino)-1,2,2,6-pentamethylpiperidin
40) 4-Methacrylamido-1,2,2,6,6-pentamethylpiperidin

c) Lichtschutzmittel der Formel (IV),

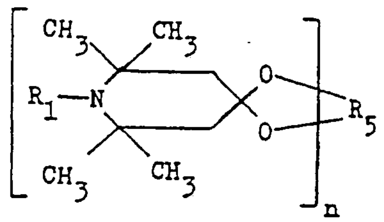

(IV)

worin n die Zahl 1 oder 2 bedeutet, $R_1$ die unter a) angegebene Bedeutung hat und $R_5$, wenn n = 1, $C_2$—$C_8$ Alkylen oder Hydroxyalkylen oder $C_4$—$C_{22}$ Acyloxyalkylen, wenn n = 2, die Gruppe $(—CH_2)_2C(CH_2—)_2$ bedeutet.

Bedeutet $R_5$ $C_2$—$C_8$ Alkylen oder Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$—$C_{22}$ Acyloxyalkylen bedeutet $R_5$ z.B. 2-Ethyl-2-acetoxymethylpropylen.

Beispiele für Tetramethylpiperidin-Lichtschutzmittel dieser Klasse sind folgende Verbindungen:

41) 9-Aza-8,8,10,10-tetramethyl-1,5-dioxaspiro [5.5] undecan
42) 9-Aza-8,8,10,10-tetramethyl-3-ethyl-1,5-dioxaspiro [5.5] undecan
43) 8-Aza-2,7,7,8,9,9-hexamethyl-1,4-dioxaspiro [4.5] decan
44) 9-Aza-3-hydroxymethyl-3-ethyl-8,8,9,10,10-pentamethyl-1,5-dioxaspiro [5.5] undecan
45) 9-Aza-3-ethyl-3-acetoxymethyl-9-acetyl-8,8,10,10-tetramethyl-1,5-dioxaspiro [5.5] undecan
46) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-tetramethylpiperidin).

d) Lichtschutzmittel der Formeln (VA), (VB) und (VC),

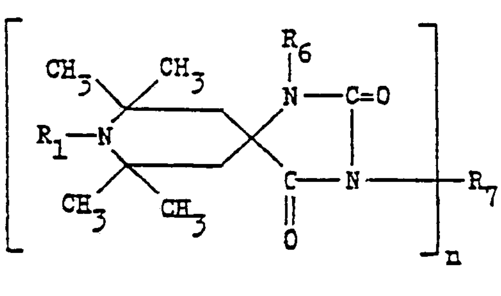

(VA)

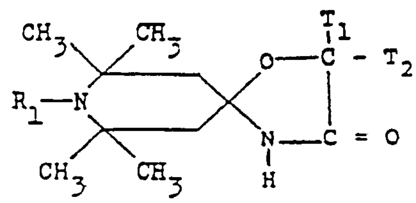

(VB)

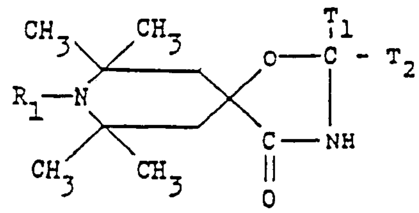

(VC)

worin n die Zahl 1 oder 2 bedeutet, $R_1$ die unter a) angegebene Bedeutung hat, $R_6$ Wasserstoff, $C_1$—$C_{12}$ Alkyl, Allyl, Benzyl, Glycidyl oder $C_2$—$C_6$ Alkoxyalkyl ist und $R_7$, wenn n = 1, Wasserstoff, $C_1$—$C_{12}$ Alkyl, $C_3$—$C_5$ Alkenyl, $C_7$—$C_9$ Aralkyl, $C_5$—$C_7$ Cycloalkyl, $C_2$—$C_4$ Hydroxalkyl, $C_2$—$C_6$ Alkoxyalkyl, $C_6$—$C_{10}$ Aryl, Glycidyl oder eine Gruppe der Formel —$(CH_2)_p$—COO—Q oder der Formel —$(CH_2)_p$—O—CO—Q ist, worin p 1 oder 2 und Q $C_1$—$C_4$ Alkyl oder Phenyl sind, wenn n = 2, $C_2$—$C_{12}$ Alkylen, $C_6$—$C_{12}$ Arylen, eine Gruppe —$CH_2$—CH(OH)—$CH_2$—O—X—O—$CH_2$—CH(OH)—$CH_2$—, worin X $C_2$—$C_{10}$ Alkylen, $C_6$—$C_{15}$ Arylen, $C_6$—$C_{12}$ Cycloalkylen ist, oder eine Gruppe —$CH_2CH(OZ')CH_2$—$(OCH_2$—$CH(OZ')CH_2)_2$— bedeutet, worin Z' Wasserstoff, $C_1$—$C_{18}$ Alkyl, Allyl, Benzyl, $C_2$—$C_{12}$ Alkanoyl oder Benzoyl ist, $T_1$ und $T_2$ unabhängig voneinander Wasserstoff, $C_1$—$C_{18}$ Alkyl oder gegebenenfalls durch Halogen oder $C_1$—$C_4$ Alkyl substituiertes $C_6$—$C_{10}$ Aryl oder $C_7$—$C_9$ Aralkyl bedeuten oder $T_1$ und $T_2$ zusammen mit dem sie bindenden C-Atom einen $C_5$—$C_{12}$ Cycloalkanring bilden.

Bedeuten etwaige Substituenten $C_1C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$—$C_{18}$ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$—$C_6$ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R_7$ $C_3$—$C_5$ Alkenyl dar, so bedeutet es z.B. 1-Propenyl, Allyl, Methallyl, 2-Butenyl oder 2-Pentenyl.

Als $C_7$—$C_9$ Aralkyl sind $R_7$, $T_1$ und $T_2$ insbesondere Phenethyl oder vor allem Benzyl, Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R_7$ $C_2$—$C_4$ Hydroxyalkyl, so stellt es z.B. 2-Hydroxyethyl, 2-Hydroxypropyl, 2-Hydroxybutyl oder 4-Hydroxybutyl dar.

Als $C_6$—$C_{10}$ Aryl bedeuten $R_7$, $T_1$ und $T_2$ insbesondere Phenyl, α- oder β-Naphthyl, die gegebenenfalls mit Halogen oder $C_1$—$C_4$ Alkyl substituiert sind.

Stellt $R_7$ $C_2$—$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$—$C_{12}$ Alkenylen bedeutet $R_7$ insbesondere 2-Butenylen, 2-Pentenylen oder 3-Hexenylen.

Bedeutet $R_7$ $C_6$—$C_{12}$ Arylen, so stellt es beispielsweise o-, m- oder p-Phenylen, 1,4-Naphthylen oder 4,4'-Diphenylen dar.

Bedeutet Z' $C_2$—$C_{12}$ Alkanoyl, so stellt es beispielsweise Propionyl, Butyryl, Octanoyl, Dodecanoyl, aber bevorzugt Acetyl dar.

X hat als $C_2$—$C_{10}$ Alkylen, $C_6$—$C_{15}$ Arylen oder $C_6$—$C_{12}$ Cycloalkylen die unter b) angegebene Bedeutung.

Beispiele für Tetramethylpiperidin-Lichtschutzmittel dieser Klasse sind folgende Verbindungen:

47) 3-Benzyl-1,3,8-triaza-7,7,9,9-tetramethylspiro [4.5] decan-2,4-dion
48) 3-n-Octyl-1,3,8-triaza-7,7,9,9-tetramethylspiro [4.5] decan-2,4-dion
49) 3-Allyl-1,3,8-triaza-1,7,7,9,9-pentamethylspiro [4.5] decan-2,4-dion
50) 3-Glycidyl-1,3,8-triaza-7,7,8,9,9-pentamethylspiro [4.5] decan-2,4-dion
51) 3-iso-Propyl-7,7,9,9-tetramethyl-1-oxa-3,8-diaza-4-oxo-spiro [4.5] decan
52) 2,2-Dibutyl-7,7,9,9,-tetramethyl-1-oxa-3,8-diaza-4-oxo-spiro [4.5] decan
53) 2,2,4,4-Tetramethyl-7-oxa-3,20-diaza-21-oxa-dispiro [5.1.11.2] heneicosan
54) 2-Butyl-7,7,9,9-tetramethyl-1-oxa-4,8-diaza-3-oxo-spiro [4,5) decan

oder die Verbindungen der folgenden Formeln:

55) 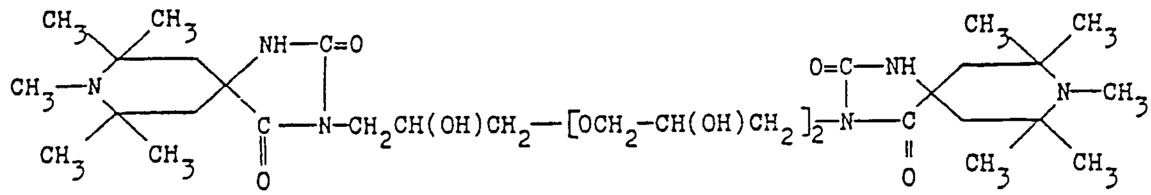

56) 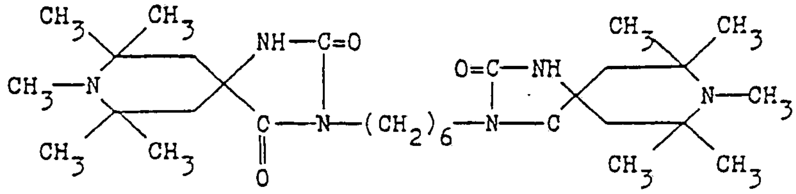

57) 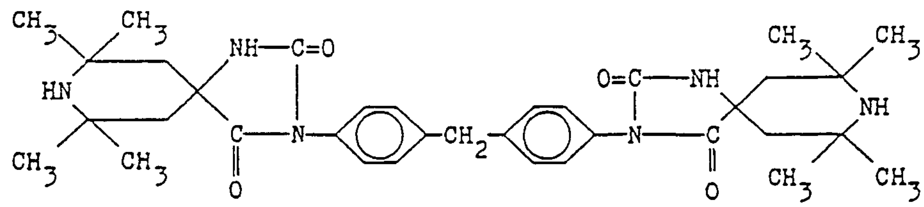

e) Lichtschutzmittel der Formel (VI),

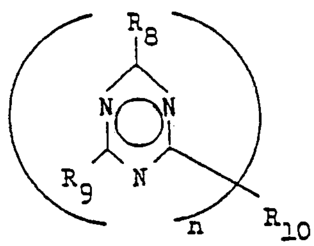 (VI)

worin n die Zahl 1 oder 2 ist und $R_8$ eine Gruppe der Formel

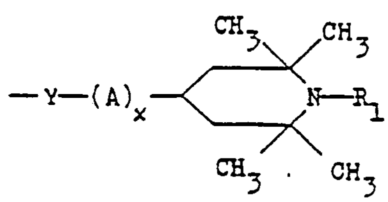

bedeutet, worin $R_1$ die unter a) angegebene Bedeutung hat, Y —O— oder —$NR_{11}$ ist, A $C_2$—$C_6$ Alkylen oder —$(CH_2)_3$—O— und x die Zahlen 0 oder 1 bedeuten, $R_9$ gleich $R_8$ oder eine der Gruppen —$NR_{11}R_{12}$, —$OR_{13}$, —$NHCH_2OR_{13}$ oder —$N(CH_2OR_{13})_2$ ist, $R_{10}$ wenn n = 1 die Gruppen $R_8$ oder $R_9$ und wenn n = 2 die Gruppe —Y—B—Y—, worin B gegebenenfalls durch —$N(R_{11})$— unterbrochenes $C_2$—$C_6$ Alkylen bedeutet, $R_{11}$ $C_1$—$C_{12}$ Alkyl, Cyclohexyl, Benzyl oder $C_1$—$C_4$ Hydroxyalkyl oder eine Gruppe der Formel

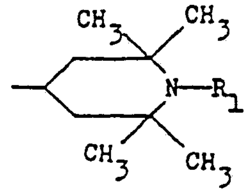

ist, $R_{12}$ $C_1$—$C_{12}$ Alkyl, Cyclohexyl, Benzyl, $C_1$—$C_4$-Hydroxyalkyl und $R_{13}$ Wasserstoff, $C_1$—$C_{12}$ Alkyl oder Phenyl bedeuten oder $R_{11}$ und $R_{12}$ zusammen $C_4$—$C_5$ Alkylen oder Oxaalkylen sind oder auch $R_{11}$ und $R_{12}$ jeweils eine Gruppe der Formel

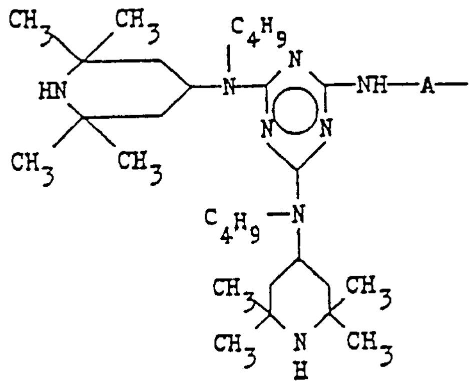

bedeuten.

Bedeuten etwaige Substituenten $C_1$—$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$—$C_4$ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeuten A $C_2$—$C_6$ Alkylen, so stellt es beispielsweise Ethylen, Propylen, 2,2-Dimethylpropylen, Tetramethylen oder Hexamethylen dar.

Stellen $R_{11}$ und $R_{12}$ zusammen $C_4$—$C_5$ Alkylen oder Oxaalkylen dar, so bedeutet dies z.B. Tetramethylen, Pentamethylen oder 3-Oxapentamethylen.

Beispiele für Tetramethylpiperidin-Lichschutzmittel dieser Klasse sind die Verbindungen der folgenden Formeln:

58) 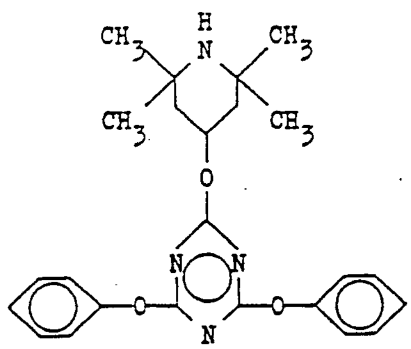

59) 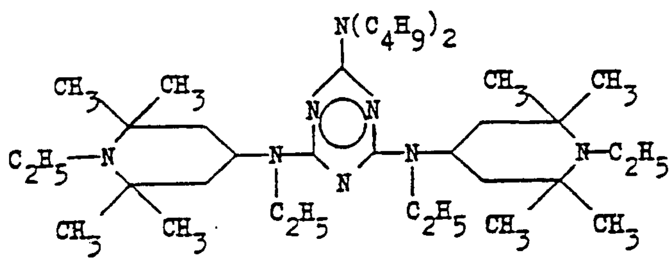

60) 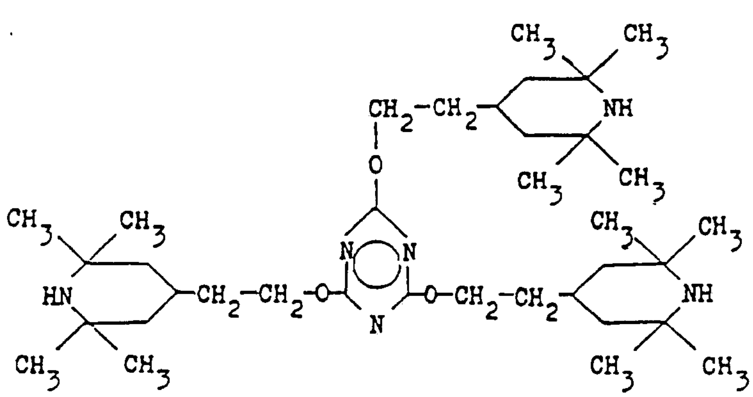

61) 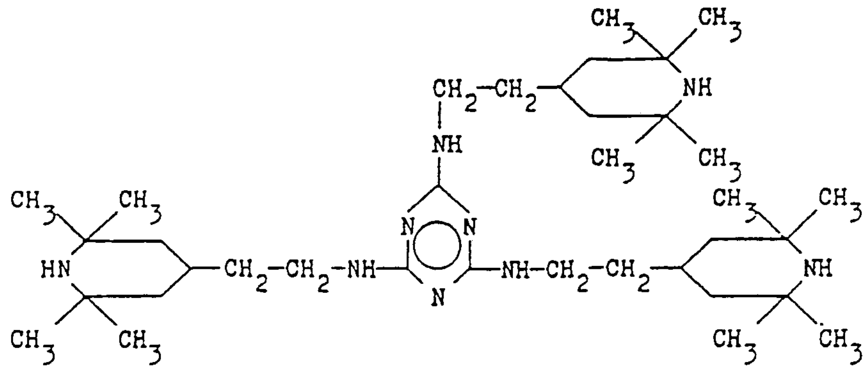

62) 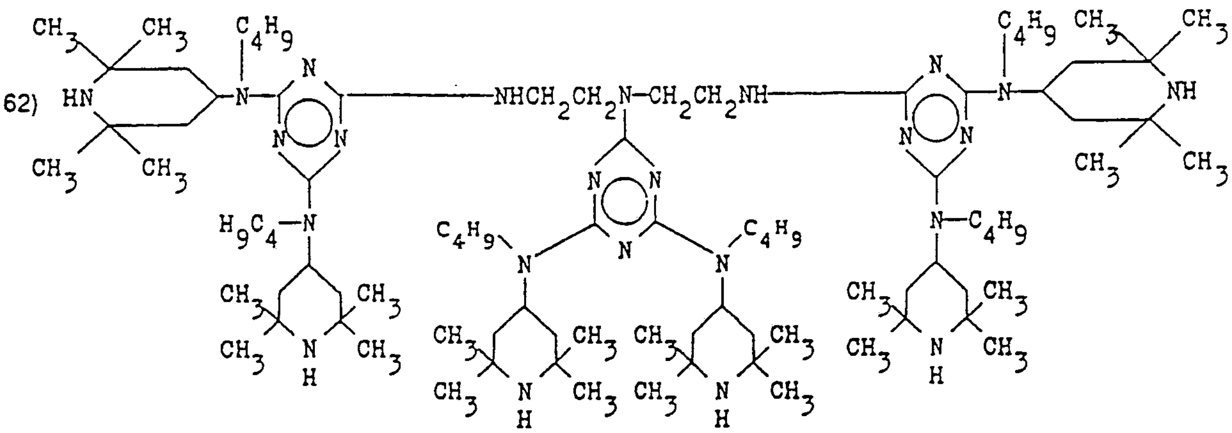

63) 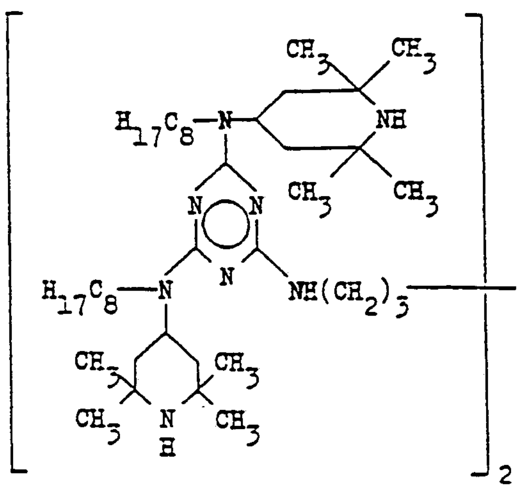

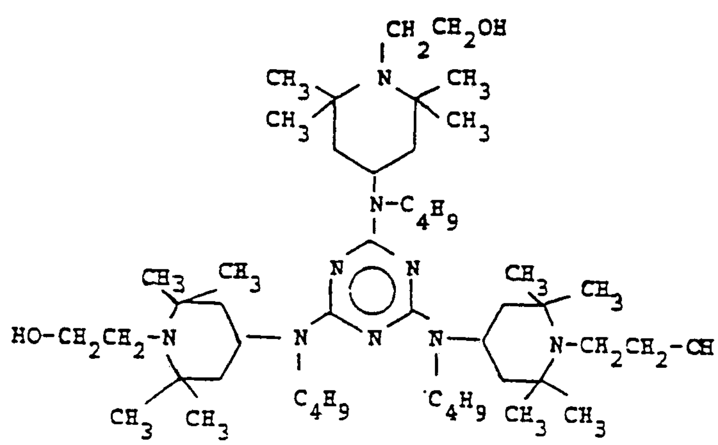

f) Lichtschutzmittel der Formel (VII),

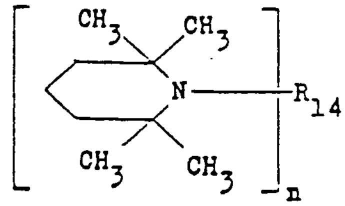

(VII)

worin n die Zahl 1 oder 2 bedeutet, und $R_{14}$, wenn n = 1, $C_4$—$C_{18}$ Alkyl, $C_7$—$C_{12}$ Aralkyl, die Gruppe —CO—$R_{15}$, durch —CN, —$COOR_{16}$, —OH oder —$OCOR_{17}$ substituiertes $C_1$—$C_4$ Alkyl oder —$CH_2$—CH(OH)—

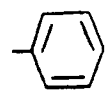

bedeutet, wobei $R_{15}$ $C_1$—$C_{12}$ Alkyl, $C_2$—$C_4$ Alkenyl oder Phenyl, $R_{16}$ $C_1$—$C_{18}$ Alkyl, $R_{17}$ $C_1$—$C_{18}$ Alkyl, $C_2$—$C_{10}$ Alkenyl, Cyclohexyl, Benzyl oder $C_6$—$C_{10}$ Aryl sind oder, wenn n = 2, $R_{14}$ $C_4$—$C_{12}$ Alkylen, 2-Butenylen-1,4, Xylylen, die Gruppe —$(CH_2)_2$—OOC—$R_{18}$—COO—$(CH_2)_2$— oder die Gruppe —$CH_2$—OOC—$R_{19}$—COO—$CH_2$— ist, wobei $R_{18}$ $C_2$—$C_{10}$ Alkylen, Phenylen oder Cyclohexylen und $R_{19}$ $C_2$—$C_{10}$ Alkylen, Xylylen oder Cyclohexylen bedeuten.

Bedeuten etwaige Substituenten $C_1$—$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten, die $C_1$—$C_{18}$ Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen $C_2$—$C_{10}$ Alkylen dar, so bedeuten sie beispielsweise Ethylen, Propylen, 2,2-Dimethylpropylen, Tetramethylen, Hexamethylen, Octamethylen oder Decamethylen.

$R_{14}$ bedeutet als $C_4$—$C_{18}$ Alkyl z.B. n-Butyl, sek.-Butyl, tert.-Butyl, n-Hexyl, n-Octyl, 2-Ethyl-hexyl, 1,1-Dimethyl-2-tert. -butylethyl, n-Nonyl, n-Decyl, n-Dodecyl, n-Tridecyl, n-Tetradecyl, n-Hexadecyl oder n-Octadecyl.

Bedeutet $R_{14}$ ein durch —CN substituiertes $C_1$—$C_4$ Alkyl, so stellt es beispielsweise Cyanomethyl, Cyanoäthyl, 3-Cyano-n-propyl oder 4-Cyano-n-butyl dar.

Bedeutet $R_{14}$ $C_4$—$C_{12}$ Alkylen, so handelt es sich z.B. um 2,2-Dimethylpropylen, Tetramethylen, Hexamethylen, Octamethylen, Decamethylen oder Dodecamethylen.

Stellt $R_{14}$ $C_7$—$C_{12}$ Aralkyl dar, so bedeutet es insbesondere Phenethyl, p-Methyl-benzyl oder vor allem Benzyl.

$R_{15}$ bedeutet als $C_2$—$C_4$ Alkenyl beispielsweise Vinyl, 1-Propenyl, Allyl, Methallyl, 2-Butenyl.

$R_{17}$ bedeutet als $C_2$—$C_{10}$ Alkenyl, z.B. die für $R_{15}$ in der Bedeutung Alkenyl angeführten Gruppen und dazu noch beispielsweise Crotyl, 2-Hexenyl, 2-Octenyl oder 2-Decenyl. Stellt $R_{17}$ $C_6$—$C_{10}$ Aryl dar, so bedeutet es beispielsweise gegebenenfalls in o- oder p-Stellung mit Methyl, Ethyl, Isopropyl, n-Butyl oder tert.-Butyl substituiertes Phenyl.

Beispiele für Tetramethylpiperidin-Lichtschutzmittel dieser Klasse sind folgende Verbindungen:

65) Bis-[β-(2,2,6,6-tetramethylpiperidino)-ethyl]-sebacat

66) α-(2,2,6,6-Tetramethyl-piperidino)-essigsäure-n-octylester

67) 1,4-Bis-(2,2,6,6-tetramethylpiperidino)-2-buten.

g) Lichtschutzlmitter der Formel (VIII),

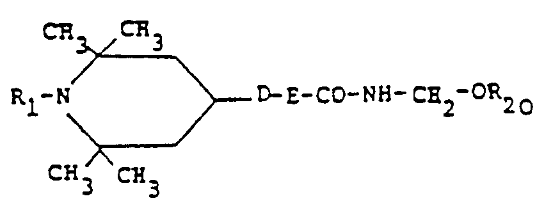

(VIII)

worin D —$N(R_{21})$— oder —O— ist, E $C_1$—$C_3$ Alkylen, die Gruppe —$CH_2$—CH(Z)—O—, worin Z Wasserstoff, Methyl oder Phenyl ist, die Gruppe —$CH_2)_3$—NH— oder eine Einfachbindung bedeutet, $R_1$ die unter a) angegebene Bedeutung hat, $R_{20}$ Wasserstoff oder $C_1$—$C_{18}$ Alkyl bedeutet, $R_{21}$ Wasserstoff, $C_1$—$C_{18}$ Alkyl, $C_5$—$C_7$ Cycloalkyl, $C_7$—$C_{12}$ Aralkyl, Cyanoethyl, $C_6$—$C_{10}$ Aryl, die Gruppe —$CH_2$—CH(Z)—OH, eine Gruppe der Formel

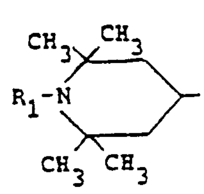

oder eine Gruppe der Formel

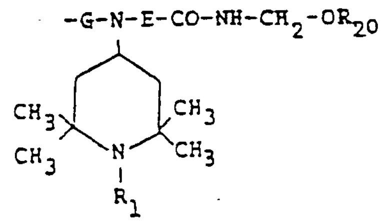

bedeutet worin Z Wasserstoff, Methyl oder Phenyl und G $C_2$—$C_6$ Alkylen oder $C_6$—$C_{12}$ Arylen sein kann, oder $R_{21}$ eine Gruppe —E—CO—DNH—$CH_2$—$OR_{20}$ ist.

Bedeuten etwaige Substituenten $C_1$—$C_{18}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Dectyl, n-Undecyl, n-Dodecyl, n-Tridecyl, n-Tetradecyl, n-Hexadecyl oder n-Octadecyl dar.

Stellen etwaige Substituenten $C_7$—$C_{12}$ Aralkyl dar, so bedeuten sie beispielsweise Phenethyl oder insbesondere Benzyl.

Wenn $R_1$ $C_3$—$C_8$ Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

$R_1$ ist als $C_3$—$C_8$ Alkinyl bevorzugt Propargyl. Als $C_1$—$C_8$ Alkanoyl bedeutet $R_1$ beispielsweise Formyl, Propionyl, Butyryl, Octanoyl, aber bevorzugt Acetyl und als $C_3$—$C_5$ Alkenoyl insbesondere Acryloyl.

$R_{21}$ bedeutet als $C_5$—$C_7$ Cycloalkyl, insbesondere Cyclohexyl.

Als $C_6$—$C_{10}$ Aryl bedeutet $R_{21}$ insbesondere Phenyl, α- oder β-Naphthyl, die gegebenenfalls mit Halogen oder $C_1$—$C_4$ Alkyl substituiert sind. E bedeutet als $C_1$—$C_3$ Alkylen z.B. Methylen, Ethylen oder Propylen.

G stellt als $C_2$—$C_6$ Alkylen beispielsweise Ethylen, Propylen, 2,2-Dimethylpropylen, Tetramethylen oder Hexamethylen und als $C_6$—$C_{12}$ Arylen o-, m- oder p-Phenylen, 1,4-Naphthylen oder 4,4'-Diphenylen dar.

Beispiele für Tetramethylpiperidin-Lichtschutzmittel dieser Klasse sind folgende Verbindungen:

68) N-Hydroxymethyl-N'-2,2,6,6-tetramethylpiperidin-4-yl-harnstoff.

69) N-Methoxymethyl-N'-2,2,6,6-tetramethylpiperidin-4-yl-harnstoff.

70) N-Methoxymethyl-N'-n-dodecyl-N'-2,2,6,6-tetramethylpiperidin-4-yl-harnstoff.

71) O-(2,2,6,6-Tetramethylpiperidin-4-yl)-N-methoxymethyl-urethan.

h) Lichtschutzmittel der Formel (IX),

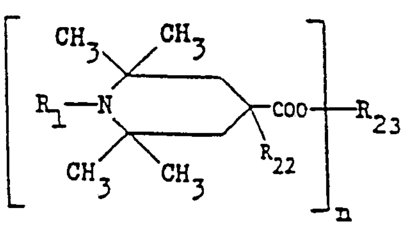

(IX)

worin n eine Zahl von 1 bis 4, vorzugsweise 1 oder 2 ist, $R_1$ die unter a) angegebene Bedeutung hat, $R_{22}$ Wasserstoff, Hydroxyl oder $C_1$—$C_8$ Alkoxy ist und $R_{23}$, wenn n 1 ist. $C_1$—$C_{20}$ Alkyl, $C_3$—$C_{14}$ Alkoxyalkyl, $C_5$—$C_{12}$ Cycloalkyl oder $C_7$—$C_{14}$ Aralkyl bedeutet, wenn n 2 ist, $C_2$—$C_{12}$ Alkylen, durch ein oder zwei —O— unterbrochenes $C_4$—$C_9$ Alkylen, $C_6$—$C_{12}$ Cycloalkylen, $C_8$—$C_{16}$ Cycloalkylen-dialkylen oder $C_8$—$C_{14}$ Aralkylen bedeutet, wenn n 3 ist, $C_3$—$C_{12}$ Alkantriyl bedeutet, und wenn n 4 ist, $C_4$—$C_{12}$ Alkantetrayl bedeutet.

Beispiele für $R_{23}$ als einwertiger Rest sind Ethyl, 2-Ethylbutyl, n-Octyl, n-Dodecyl, n-Octadecyl, 2-Isopropoxyethyl, 2-Dodecyloxyethyl, 2-Butoxypropyl, Cyclohexyl, Cyclooctyl, Benzyl oder 2-Phenylethyl. Beispiele für $R_{23}$ als zweiwertiger Rest sind 1,2-Ethylen, Tetramethylen, Hexamethylen, Octamethylen, Dodecamethylen, 3-Oxa-pentamethylen, 3,6-Dioxa-octamethylen, 1,4-Cyclohexylen, 1,5-Cyclooctylen, 1,4-Cyclohexylen-dimethylen, 1,4-Cyclohexylen-diethylen, m- oder p-Xylylen. Beispiele für $R_{23}$ als dreiwertiger Rest sind Propan-1,2,3-triyl, 1,1,1-Trimethylenethan oder 1,1,1-Trimethylenpropan. Beispiele für $R_{23}$ als vierwertiger Rest sind Butan-1,2,3,4-tetrayl oder Tetramethylenmethan.

i) Polymere Verbindungen, deren wiederkehrende Struktureinheit einen Tetramethylpiperidinrest der Formel (I) enthält, insbesondere Polyester, Polyether, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für Tetramethylpiperidin-Lichtschutzmittel dieser Klasse sind die Verbindungen der folgenden Formeln, wobei m die Zahlen 2- etwa 200 bedeutet.

72) 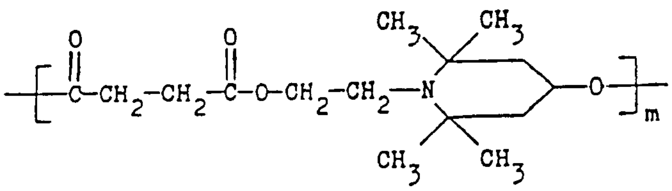

73) 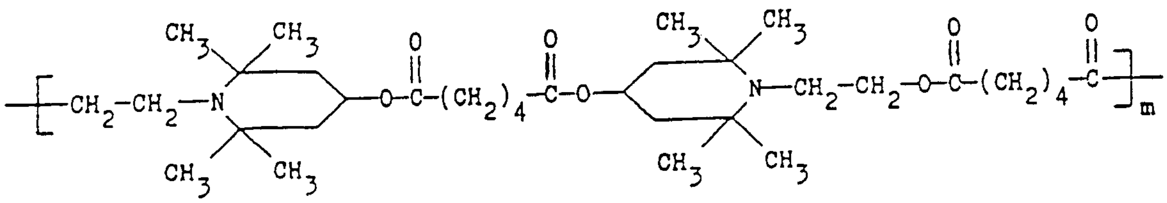

74) 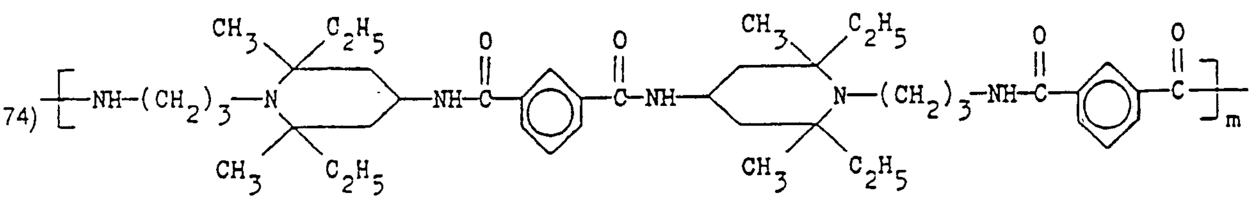

75) 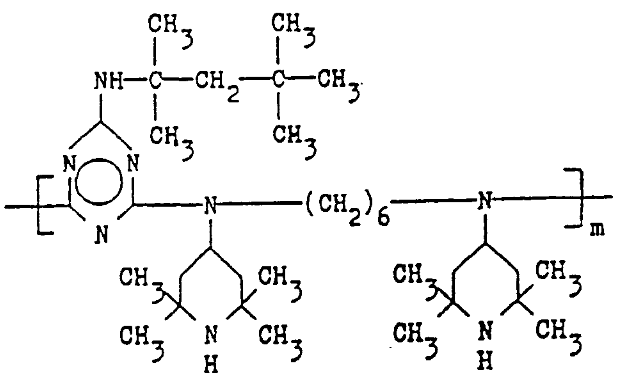

76) 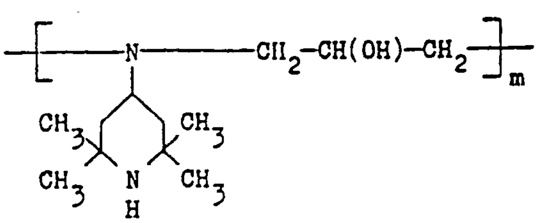

77) 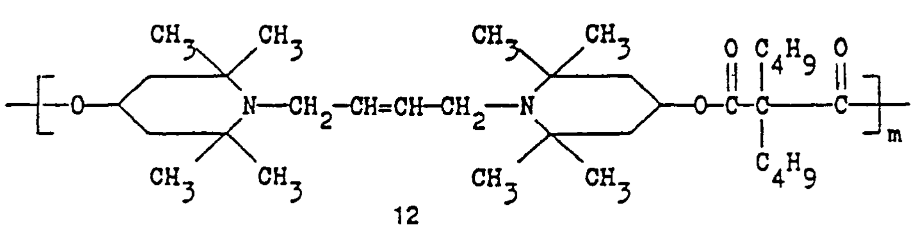

78) 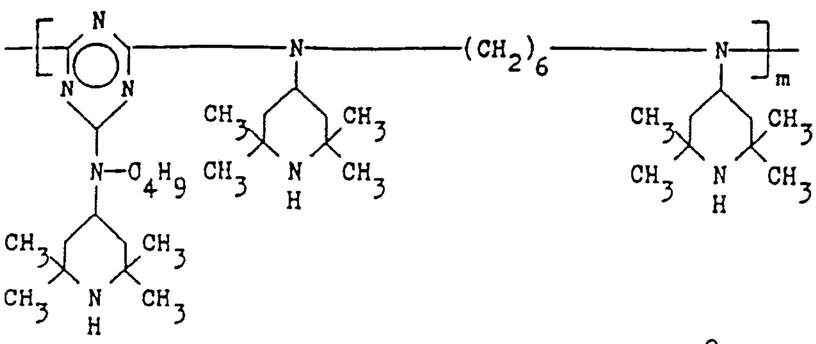

79) 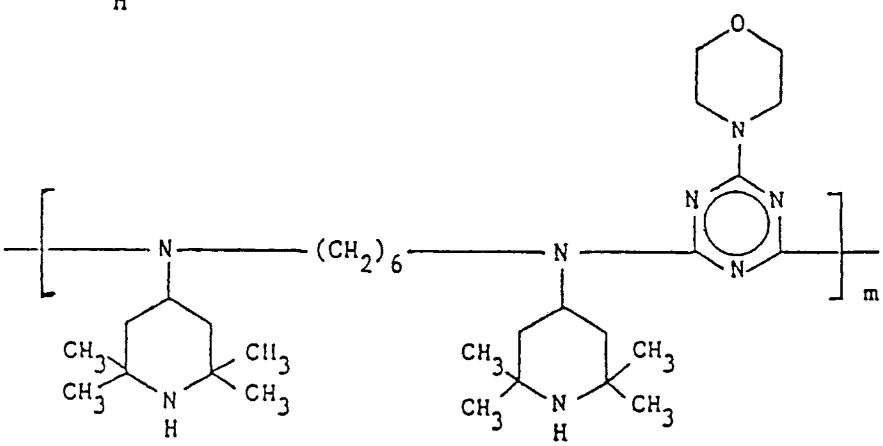

80) 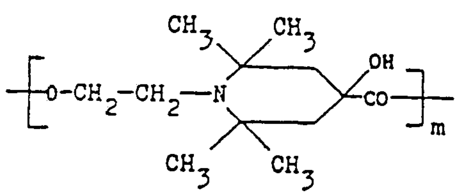

81) 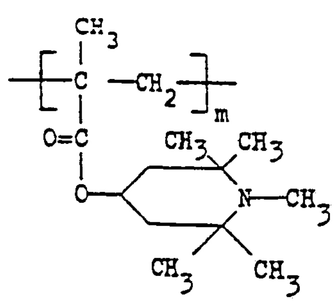

82) 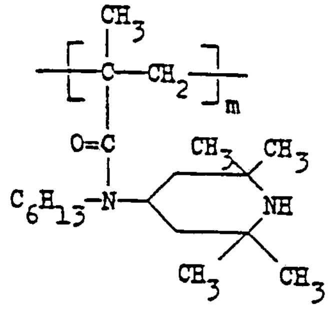

j) Verbindungen, die in ihrem Molekül mindestens eine 2-(2'-Hydroxyphenyl)-benztriazol-Gruppe oder 2-Hydroxybenzophenon-Gruppe und mindestens eine Tetramethylpiperidingruppe enthalten.

Beispiele für Tetramethylpiperidinlichtschutzmittel dieser Klasse sind die Verbindungen der folgenden Formeln:

83) 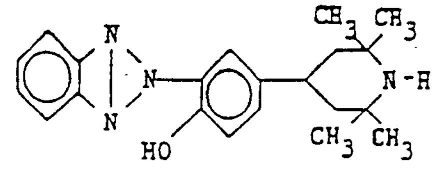

84) 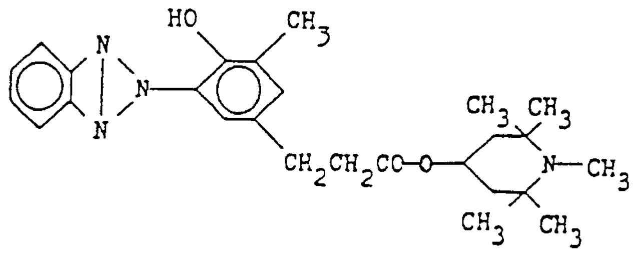

85) 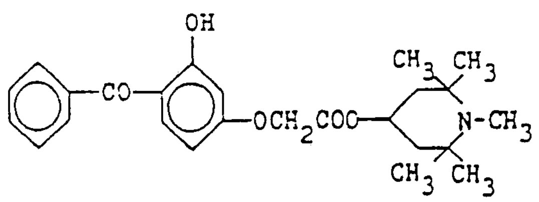

86) 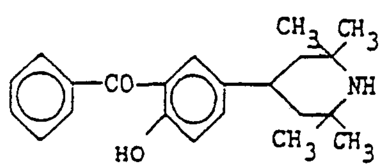

Soweit die Tetramethylpiperidinverbindungen basische Verbindungen sind, können sie mit Säuren Salze bilden. Hierfür kommen beispielsweise anorganische Säuren oder organische Carbon-, Sulfon-, Phosphon- oder Phosphinsäuren in Frage, wie z.B. Chlorwasserstoffsäure, Borsäure, Phosphorsäure, Essigsäure, Salicylsäure, Toluolsulfonsäure oder Benzolphosphonsäure.

Die erfindungsgemäss mitverwendbaren UV-Absorber sind ebenfalls allgemein bekannt. Hierzu gehören insbesondere die folgenden Verbindungsklassen:

1. 2-(2'-Hydroxyphenyl)-benztriazole, wie z.B. das 5'-Methyl-, 3'-5'-Di-tert.-butyl-, 5'-tert.-Butyl-, 5'-(1,1,1,3,3-Tetramethylbutyl)-, 5-Chlor-3',5'-di-tert.-butyl-, 5-Chlor-3'-tert.-butyl-5'-methyl-, 3'-sec.-Butyl-5'-tert.-butyl-, 3'-α-Methylbenzyl-5'-methyl-, 3'-α-Methylbenzyl-5'-methyl-5-chlor-, 4'-Hydroxy 4'-Methoxy-, 4'-Octyloxy-, 3',5'-Di-tert.-amyl-, 3'-Methyl-5'-carboxymethoxyethyl-, 3',5'-Bis(α,α-dimethylbenzyl)-, 3',5'-Bis(α,α-dimethylbenzyl)-5-chlor-, 3',5'-Di-tert.-octyl-, 3',5'-Di-tert.-octyl-5-chlor- oder das 5-Chlor-3',5'-di-tert.-amyl-Derivat.

2. 2,4-Bis-(2'-hydroxyphenyl)-6-alkyl-s-triazine, wie z.B. das 6-Ethyl-, 6-Heptadecyl- oder 6-Undecyl-Derivat.

3. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy- oder 2-Hydroxy-4,4'-dimethoxy-Derivat.

4. 1,3-Bis-(2'-hydroxybenzoyl)-benzole, z.B. 1,3-Bis(2'-hydroxy-4'-hexyloxy-benzoyl)-benzol, 1,3-Bis-(2'-hydroxy-4'-octyloxy-benzoyl)-benzol oder 1,3-Bis-(2'-hydroxy-4'-dodecyloxy-benzoyl)-benzol.

5. Ester von gegebenenfalls substituierten Benzoesäuren, wie z.B. 4-tert.-Butyl-phenylsalicylat, Phenylsalicylat, Octylphenylsalicylat, Dibenzoylresorcin, Bis(4-tert.-butylbenzyol)-resorcin, Benzoylresorcin, 3,5-Di-tert.-butyl-4-hydroxybenzoesäure-2,4-di-tert.-butylphenylester.

6. Acrylate, wie z.B. α-Cyan-β,β-diphenylacrylsäure-ethylester bzw. -isooctylester, α-Carbomethoxyzimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

7. Oxalsäurediamide, wie z.B. 4,4'-Di-octyloxy-oxanilid, 2,2'-Di-oxtyloxy-5,5'-di-tert.-butyl-oxanilid, 2,2'-Di-dodecyloxy-5,5'-di-tert.-butyl-oxanilid, 2-Ethoxy-2'-ethyl-oxanilid,N,N'-Bis-(3-dimethylaminopropyl)-oxalamid, 2-Ethoxy-5-tert.-butyl-2'-ethyl-oxanilid, 2-Ethoxy-2'-ethyl-5,4'-di-tert.-butyl-oxanilid, Gemische von ortho- und para-Methoxy- sowie von o- und p-Ethoxy-disubstituierten Oxaniliden.

Unter den erfindungsgemäss mitverwendeten UV-Absorbern werden diejenigen der Klasse 1 (Benztriazole) bevorzugt. Solche Benztriazole sind z.B. in den US-Patentschriften 3 004 896, 3 189 615, 3 320 194, 4 127 586 und 4 283 327 beschrieben.

Typische Klassen von organischen Fungiciden sind Carbamate wie z.B. 3-Iodo-2-propinyl-N-butylcarbamat, Dimethyl-dithiocarbamat, 2-sec.-Butylphenyl-N-methylcarbamat, Benzimidazol-carbamate, 1-Naphthyl-N-methylcarbamat, 3-Methyl-4-dimethylaminophenyl-N-methylcarbamat oder 3,4-Dimethyl-6-chlorphenyl-N-methylcarbamat; chlorierte Phenole wie z.B. Tetrachlorphenol, Pentachlorphenol oder Natriumpentachlorphenolat; nichtphenolische Chlorverbindungen wie z.B. 1-Chlornaphthalin, N-Trichlormethylthio-4-cyclohexen-1,2-dicarboximid, N-Trichlormethylthiophthalimid, Tetrachlorisophthalonitril, Tetrachlorpyridin-4-methylsulfonat, 2,4-Dichlor-6-(o-chloranilino)-s-triazin, 2,3-Dichlor-1,4-naphthochinon, α,α-Bis(p-chlorphenyl)-3-pyridyl-methanol oder Pentachlornitrobenzol; Organozinnverbindungen wie z.B. Tributylzinnoxid; Quecksilber-Verbindungen wie z.B. Phenylquecksilber-acetat oder -oleat; Zinkverbindungen wie z.B. Zn-naphthenat oder Zn-Dimethyldithiocarbamat; Kupferverbindungen wie z.B. Kupfer-naphthenat; Ketone wie z.B. 2-n-Octyl-4-isothiazolin-3-on oder 3,3'-Ethylen-bis[tetrahydro-4,6-dimethyl-2H-1,3,5-thiadiazin-2-thion]; Sulfone wie z.B. 1,2-Bis-(n-propylsulfonyl)-ethan oder andere Fungicide wie sie dem Fachmann bekannt sind. Es sei hierzu auch auf die Fachliteratur hingewiesen, z.B. Dewayne, Torgeson, "Fungicides", Vol. II, Academic Press, New York, 1969, oder Ullmanns Encyclopädie der technischen Chemie, 4, Auflage, Band 12, 1—14 (1976).

Die Stabilisatoren werden erfindungsgemäss in einer Menge von beispielsweise etwa 0,25 bis 4 Gew.-Teilen, vorzugsweise 0,5 bis 1,5 Gew.-Teilen pro Gew.-Teil des Fungicides verwendet. Soweit eine Kombination von Piperidinverbindung und UV-Adsorber verwendet wird, beträgt deren Gewichtsverhältnis vorzugsweise 16 : 1 bis 1 : 16, insbesondere 3 : 1 bis 1 : 3. Die jeweilige Einsatzmenge wird von der Natur des Fungicides, von dem gewünschten Grad die Stabilisierung und von der Natur des Substrates abhängen. Das Zumischen des Stabilisators zum Fungicid oder zur fungiciden Formulierung ist kein Problem und kann nach den üblichen Methoden zu jedem beliebigen Zeitpunkt vor der Applikation geschehen.

Spezielle Anwendungsformen von Holzschutzanstrichen sind z.B. wasserbeweisende Imprägnierungen, Lasuren und ähnliche Anstrichformulierungen für Holz. Solche Formulierungen können Bindemittel enthalten wie z.B. Alkydharze, Acrylharze, Polyesterharze, Phenolharze, Polyurethane, Epoxidharze oder Mischungen davon, sie können Lösungsmittel enthalten, oberflächenaktive Mittel, Entschäumer, Verdicker wie z.B. Carboxymethylcellulose oder Polyacrylsäurederivate, Weichmacher, Dispergiermittel, wasserabweisende Mittel, trocknende Oele, Pigmente, Füllstoffe, wie z.B. Asbest, Talk oder Kaolin und ähnliche Bestandteile.

Die folgenden Beispiele illustrieren verschiedene Anwendungsgebiete der Erfindung. Darin bedeutet Teil stets Gewichtsteil und Prozent Gewichtsprozent.

Die folgenden Stabilisatoren werden in den Beispielen verwendet:

A — 2-(2'-Hydroxy-3',5'-di-tert.-amylphenyl)-benztriazol

B — Bis-(1,2,2,6,6-pentamethyl-4-piperidyl)-secabat

Die folgenden handelsüblichen Fungicide werden in den Beispielen verwendet:

Fungicid I = 3-Iod-2-propinyl-N-butylcarbamat

Fungicid II = 1,2-Bis-(n-propylsulfonyl)-ethan

Fungicid III = N-Trichlormethylthio-phthalimid

Beispiel 1

Eine weisse Holzschutzlasur auf der Basis von Leinöl, $TiO_2$-Pigment, Lackbenzin und 2,2,4-Trimethyl-1,3-pentandiol-monoisobutyrat wird mit 0,25%, 0,5% 1%, 2% und 2,5% der Fungicide I, II und III vermischt. Jede dieser 15 Mischungen wird in 5 Proben geteilt, wovon jeweils eine Probe unstabilisiert bleibt, eine Probe wird mit 1% Stabilisator A, eine Probe mit 1% Stabilisator B, eine Probe mit 1% A und 1% B und eine Probe mit 2% A und 1% B versetzt. Die Prozentzahlen beziehen sich dabei steht auf die lösungsmittelfreie Lasur.

Die Proben werden auf Fichtenbretter von 30 × 20 × 1 cm aufgetragen. Die Bretter werden in zwei Hälften zerschnitten und im Freien der Bewitterung ausgesetzt. Die eine Hälfte wird dabei 90° nach Norden, die andere Hälfte 45° nach Süden postiert.

Nach 4 Monaten Bewitterung zeigten die nach Süden orientierten Bretter ohne Stabilisator sowie Vergleichproben ohne Fungicid, aber mit Stabilisator, starken Pilzbefall. Dies zeigt, dass die Stabilisatoren selbst keine fungicide Wirkung besitzen. Sehr wirksam zeigte sich die Kombination von 1% Fungicid I mit 1% Stabilisator A und 1% Stabilisator B.

Eine ähnliche Versuchsreihe wird mit derselben Holzschutzlasur und 0,5% Fungicid und verschiedenen Mengen der Stabilisatoren A und B über ein ganzes Jahr Bewitterung (45° Süd) durchgeführt. Als Vergleich werden die Fungicide in einer Konzentration von 0,5 und 2,0% ohne Stabilisator eingesetzt. Der Pilzbewuchs wird nach ASTM D-3274—76 mit 1—10 beurteilt, wobei 10 eine schimmelfreie Oberfläche

bedeutet. Die Tabelle 1 zeigt, dass die Proben mit 0,5% Fungicid und 1—2% Stabilisator etwa gleiche Wirkung zeigen wie unstabilisierte Proben mit 2% Fungicid.

TABELLE 1

| Fungicid | Stabilisator | Schimmelbewuchs nach 4 Monaten | 6 Monaten | 12 Monaten |
|---|---|---|---|---|
| 0,5% I | — | 6 | 2 | 4 |
| 0,5% I | 1% B | 8,5 | 7 | 7 |
| 0,5% I | 2% A + 1% B | 8 | 8 | 8 |
| 0,5% I | 1% A + 1% B | 8 | 6 | 6 |
| 2,0% I | — | 9 | 8 | 8 |
| 0,5% II | — | 8 | 4 | 5 |
| 0,5% II | 1% B | 9 | 8 | 6 |
| 0,5% II | 2% A + 1% B | 8,5 | 9 | 9 |
| 0,5% II | 1% A + 1% B | 9 | 8 | 9 |
| 2,0% II | — | 9,5 | 9 | 7 |
| 0,5% III | — | 8 | 8 | 8 |
| 0,5% III | 1% B | 8 | 6 | 4 |
| 0,5% III | 2% A + 2% B | 9 | 9 | 9 |
| 0,5% III | 1% A + 1% B | 9 | 9 | 9 |
| 2,0% III | — | 9 | 9 | 9 |

Beispiel 2

Wie in Beispiel 1 beschrieben werden Fichtenholzbretter mit einem klaren Holzlack auf Terpentinbasis und mit einem Klarlack auf Leinölbasis bestrichen. Beide Lacke werden mit 1% Fungicid IX und mit den folgenden Stabilisatoren in den angegebenen Mengen versetzt:

1% B, 2% B, 2% A + 1% B, 4% A + 2% B,

Als Vergleich werden die unstabilisierten Formulierungen appliziert. Die Bretter werden einer fünfmonatigen Freibewitterung unterzogen. Nach dieser Zeit reigen die unstabilisierten Proben einen Schimmel-Befall von 3—9 gemäss der Skala von ASTM D -3274-76, während alle stabilisierten Proben schimmelfrei sind, was dem Skalenwert 10 entspricht.

**Patentansprüche**

1. Verfahren zum Stabilisieren gegen Lichtabbau von organischen Fungiciden in Holzschutzanstrichen durch Zusatz mindestens einer 2,2,6,6-Tetramethylpiperidinverbindung oder deren Mischung mit mindestens einem UV-Absorber, wobei das Fungicid kein fungizider Weichmacher und keine 2,2,6,6-Tetraalkylpiperidinverbindung ist.

2. Verfahren gemäss Anspruch 1, dadurch gekennzeichnet, dass die Tetramethylpiperidinverbindung eine Verbindung ist, welche eine Gruppe der Formel (I)

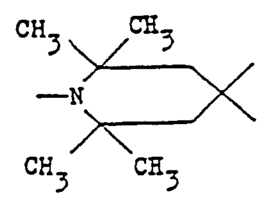

(I)

enthält.

3. Verfahren gemäss Anspruch 1, dadurch gekennzeichnet, dass die Tetramethylpiperidinverbindung eine Verbindung der Formel (II) ist,

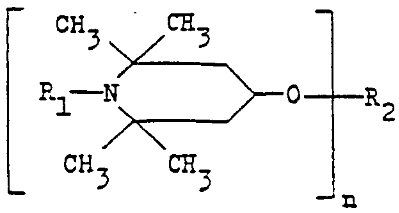

(II)

worin n eine Zahl von 1 bis 4, vorzugsweise 1 oder 2 bedeutet. $R_1$ Wasserstoff, Oxyl, $C_1$—$C_{18}$ Alkyl, $C_3$—$C_8$ Alkenyl, $C_3$—$C_8$ Alkinyl, $C_7$—$C_{12}$ Aralkyl, $C_1$—$C_8$ Alkanoyl, $C_3$—$C_5$ Alkenoyl, Glycidyl oder eine Gruppe —$CH_2CH(OH)$—Z, worin Z Wasserstoff, Methyl oder Phenyl ist, bedeutet, und $R_2$, wenn n = 1, Wasserstoff, gegebenenfalls durch ein oder mehrere Sauerstoffatome unterbrochenes $C_1$—$C_{18}$ Alkyl, Cyanethyl, Benzyl, Glycidyl, einen einwertigen Rest einer aliphatischen, cycloaliphatischen, araliphatischen oder aromatischen Carbonsäure, Carbaminsäure oder Phosphor enthaltenden Säure oder einen einwertigen Silylrest bedeutet, wenn n = 2, $C_1$—$C_{12}$ Alkylen, $C_4$—$C_{12}$ Alkenylen, Xylylen, einen zweiwertigen Rest einer aliphatischen, cycloaliphatischen araliphatischen oder aromatischen Dicarbonsäure, Dicarbaminsäure oder Phosphor enthaltenden Säure oder einen zweiwertigen Silylrest bedeutet, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n = 4, einen vierwertigen Rest einer aliphatischen cycloaliphatischen oder aromatischen Tetracarbonsäure bedeutet.

4. Verfahren gemäss Anspruch 3 unter Zusatz einer Verbindung der Formel (II), worin n 1 oder 2 bedeutet. $R_1$ Wasserstoff, $C_1$—$C_{12}$ Alkyl, Allyl, Benzyl, Acetyl oder Acryloyl ist und $R_2$, wenn n = 1, einen Rest einer aliphatischen Carbonsäure mit 2—18 C-Atomen, einer cycloaliphatischen Carbonsäure mit 7—15 C-Atomen oder einer aromatischen Carbonsäure mit 7—15 C-Atomen, wenn n = 2, einen Rest einer aliphatischen Dicarbonsäure mit 2—36 C-Atomen, einer cycloaliphatischen oder aromatischen Dicarbonsäure mit 8—14 C-Atomen oder einer aliphatischen, cycloaliphatischen oder aromatischen Dicarbaminsäure mit 8—14 C-Atomen bedeutet.

5. Verfahren gemäss Anspruch 1, dadurch gekennzeichnet, dass die Tetramethylpiperidinverbindung eine Verbindung der Formel (III) ist.

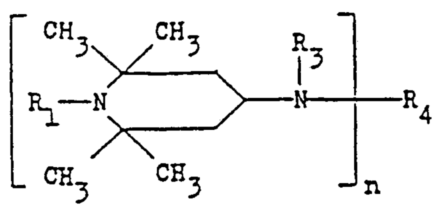

(III)

worin n die Zahl 1 oder 2 bedeutet, $R_1$ die in Anspruch 3 angegebene Bedeutung hat, $R_3$ Wasserstoff, $C_1$—$C_{12}$ Alkyl, $C_2$—$C_5$ Hydroxyalkyl, $C_5$—$C_7$ Cycloalkyl, $C_7$—$C_8$ Aralkyl, $C_2$—$C_{18}$ Alkanoyl, $C_3$—$C_5$ Alkenoyl oder Benzoyl ist und $R_4$, wenn n = 1, Wasserstoff, $C_1$—$C_{18}$ Alkyl, $C_3$—$C_8$ Alkenyl, $C_5$—$C_7$ Cycloalkyl, mit einer Hydroxy-, Cyano-, Alkoxycarbonyl- oder Carbamidgruppe substituiertes $C_1$—$C_4$ Alkyl, Glycidyl, eine Gruppe der Formel —$CH_2$—$CH(OH)$—Z oder der Formel —CONH—Z ist, worin Z Wasserstoff, Methyl oder Phenyl bedeutet; wenn n = 2, $C_2$—$C_{12}$ Alkylen, $C_6$—$C_{12}$ Arylen, Xylylen, eine —$CH_2$—$CH(OH)$—$CH_2$-Gruppe oder eine Gruppe —$CH_2$—$CH(OH)$—$CH_2$—O—X—O—$CH_2$—$CH(OH)$—$CH_2$— bedeutet, worin X $C_2$—$C_{10}$ Alkylen, $C_6$—$C_{15}$ Arylen, $C_6$—$C_{12}$ Cycloalkylen ist, oder vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure oder auch die Gruppe —CO— bedeuten kann, oder $R_3$ und $R_4$ zusammen, wenn n = 1, den zweiwertigen Rest einer aliphatischen, cycloaliphatischen oder aromatischen 1,2- oder 1,3-Dicarbonsäure bedeuten können.

6. Verfahren gemäss Anspruch 1, dadurch gekennzeichnet, dass die Tetramethylpiperidinverbindung eine Verbindung der Formel (IV) ist,

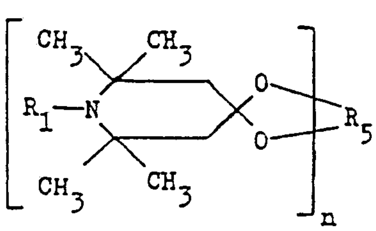

(IV)

worin n die Zahl 1 oder 2 bedeutet, $R_1$ die in Anspruch 3 angegebene Bedeutung hat und $R_5$, wenn n = 1, $C_2$—$C_8$ Alkylen oder Hydroxyalkylen oder $C_4$—$C_{22}$ Acyloxyalkylen, und wenn n = 2, die Gruppe $(—CH_2)_2C(CH_2—)_2$ bedeutet.

7. Verfahren gemäss Anspruch 1, dadurch gekennzeichnet, dass die Tetramethylpiperidinverbindung eine Verbindung der Formeln (VA), (VB) oder (VC) ist,

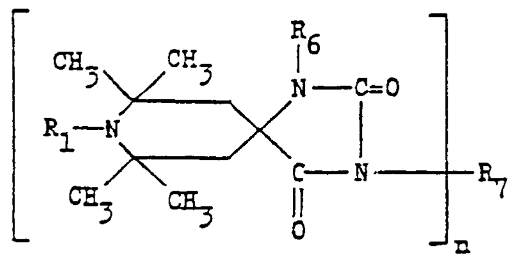

(VA)

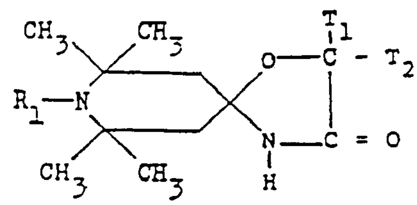

(VB)

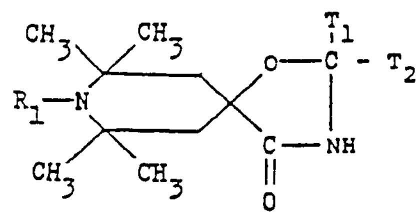

(VC)

worin n die Zahl 1 oder 2 bedeutet, $R_1$ die in Anspruch 3 angegebene Bedeutung hat, $R_6$ Wasserstoff, $C_1$—$C_{12}$ Alkyl, Allyl, Benzyl, Glycidyl oder $C_2$—$C_6$ Alkoxyalkyl ist und $R_7$, wenn n = 1, Wasserstoff, $C_1$—$C_{12}$ Alkyl, $C_3$—$C_5$ Alkenyl, $C_7$—$C_9$ Aralkyl, $C_5$—$C_7$ Cycloalkyl, $C_2$—$C_4$ Hydroxyalkyl, $C_2$—$C_6$ Alkoxyalkyl, $C_6$—$C_{10}$ Aryl, Glycidyl oder eine Gruppe der Formel $—(CH_2)_p—COO—Q$ oder der Formel $—(CH_2)_p—O—CO—Q$ ist, worin p 1 oder 2 und Q $C_1$—$C_4$ Alkyl oder Phenyl sind, wenn n = 2, $C_2$—$C_{12}$ Alkylen, $C_6$—$C_{12}$ Arylen, ein Gruppe $—CH_2—CH(OH)—CH_2—O—X—O—CH_2—CH(OH)—CH_2—$, worin X $C_2$—$C_{10}$ Alkylen, $C_6$—$C_{15}$ Arylen, $C_6$—$C_{12}$ Cycloalkylen ist, oder eine Gruppe $—CH_2CH(OZ')CH_2—(OCH_2—CH(OZ')CH_2)_2$- bedeutet, worin Z' Wasserstoff, $C_1$—$C_{18}$ Alkyl Allyl, Benzyl, $C_2$—$C_{12}$ Alkanoyl oder Benzoyl ist, $T_1$ und $T_2$ unabhängig voneinander Wasserstoff, $C_1$—$C_{18}$ Alkyl oder gegebenenfalls durch Halogen oder $C_1$—$C_4$ Alkyl substituiertes $C_6$—$C_{10}$ Aryl oder $C_7$—$C_9$ Aralkyl bedeuten oder $T_1$ und $T_2$ zusammen mit dem sie bindenden C-Atom einen $C_5$—$C_{12}$ Cycloalkanring bilden.

8. Verfahren gemäss Anspruch 1, dadurch gekennzeichnet, dass die Tetramethylpiperidinverbindung eine Verbindung der Formel (VI) ist,

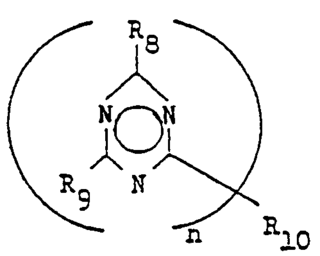

(VI)

worin n die Zahl 1 oder 2 ist und $R_8$ eine Gruppe der Formel

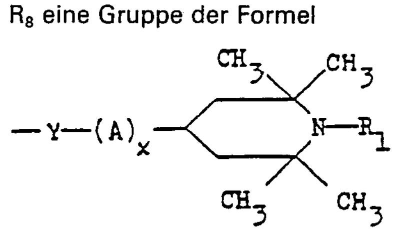

bedeutet, worin $R_1$ die in Anspruch 3 angegebene Bedeutung hat, Y—O— oder —$NR_{11}$— ist, A $C_2$—$C_6$ Alkylen oder —$(CH_2)_3$—O— und x die Zahlen 0 oder 1 bedeuten, $R_9$ gleich $R_8$ oder eine der Gruppen —$NR_{11}R_{12}$, —$OR_{13}$, —$NHCH_2OR_{13}$ oder —$N(CH_2OR_{13})_2$ ist, $R_{10}$ wenn n = 1 die Gruppen $R_8$ oder $R_9$ und wenn n = 2 die Gruppe —Y—B—Y—, worin B gegebenenfalls durch —$N(R_{11})$— unterbrochenes $C_2$—$C_6$ Alkylen bedeutet, $R_{11}$ $C_1$—$C_{12}$ Alkyl, Cyclohexyl, Benzyl oder $C_1$—$C_4$ Hydroxyalkyl oder eine Gruppe der Formel

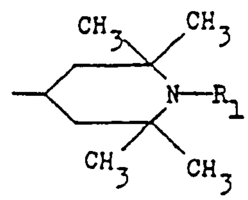

ist, $R_{12}$ $C_1$—$C_{12}$ Alkyl, Cyclohexyl, Benzyl, $C_1$—$C_4$ Hydroxyalkyl und $R_{13}$ Wasserstoff, $C_1$—$C_{12}$ Alkyl oder Phenyl bedeuten oder $R_{11}$ und $R_{12}$ zusammen $C_4$—$C_9$ Alkylen oder Oxaalkylen sind oder auch $R_{11}$ und $R_{12}$ jeweils eine Gruppe der Formel

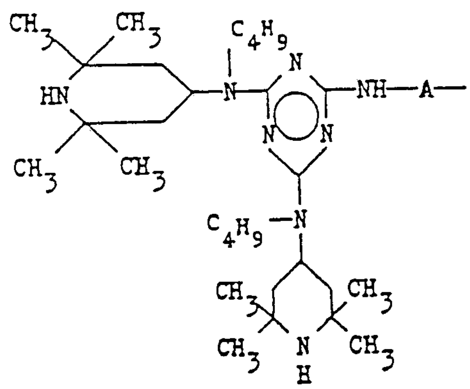

bedeuten.

9. Verfahren gemäss Anspruch 1, dadurch gekennzeichnet, dass die Tetraalkylpiperidinverbindung eine Verbindung der Formel (VII) ist,

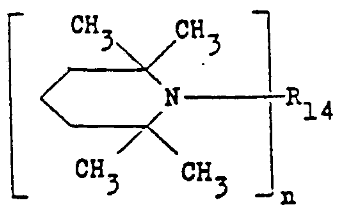

(VII)

worin n die Zahl 1 oder 2 bedeutet, und $R_{14}$, wenn n = 1, $C_4$—$C_{18}$ Alkyl, $C_7$—$C_{12}$ Aralkyl, die Gruppe—CO—$R_{15}$, durch —CN, —$COOR_{16}$, —OH oder —$OCOR_{17}$ substituiertes $C_1$—$C_4$ Alkyl oder —$CH_2$—CH—(OH)—

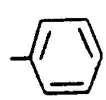

bedeutet, wobei $R_{15}$ $C_1$—$C_{12}$ alkyl, $C_2$—$C_4$ Alkenyl oder Phenyl, $R_{16}$ $C_1$—$C_{18}$ Alkyl, $R_{17}$ $C_1$—$C_{18}$ Alkyl, $C_2$—$C_{10}$ Alkenyl, Cyclohexyl, Benzyl oder $C_6$—$C_{10}$ Aryl sind oder, wenn n = 2, $R_{14}$ $C_4$—$C_{12}$ Alkylen, 2-Butenylen-1,4, Xylylen, die Gruppe —$(CH_2)_2$—OOC—$R_{18}$—COO—$(CH_2)_2$— oder die Gruppe —$CH_2$—OOC—$R_{19}$—COO—$CH_2$— ist, wobei $R_{18}$ $C_2$—$C_{10}$ Alkylen, Phenylen oder Cyclohexylen und $R_{19}$ $C_2$—$C_{10}$ Alkylen, Xylylen oder Cyclohexylen bedeuten.

10. Verfahren gemäss Anspruch 1, dadurch gekennzeichnet, dass die Tetramethylpiperidinverbindung eine Verbindung der Formel (VIII) ist,

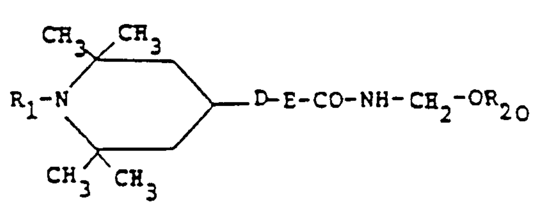

(VIII)

worin D —N($R_{21}$)— oder —O— ist, E $C_1$—$C_3$ Alkylen, die Gruppe —$CH_2$—CH(Z)—O—, worin Z Wasserstoff, Methyl oder Phenyl ist, die Gruppe —$(CH_2)_3$—NH— oder eine Einfachbindung bedeutet, $R_1$ die in Anspruch 3 angegebene Bedeutung hat, $R_{20}$ Wasserstoff oder $C_1$—$C_{18}$ Alkyl bedeutet, $R_{21}$ Wasserstoff, $C_1$—$C_{18}$ Alkyl, $C_5$—$C_7$ Cycloalkyl, $C_7$—$C_{12}$ Aralkyl, Cyanethyl, $C_6$—$C_{10}$ Aryl, die Gruppe —$CH_2$—CH(Z)—OH, eine Gruppe der Formel

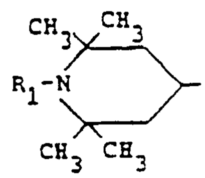

oder eine Gruppe der Formel

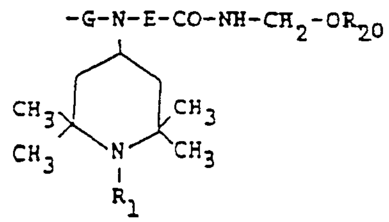

bedeutet, worin Z Wasserstoff, Methyl oder Phenyl und G $C_2$—$C_6$ Alkylen oder $C_6$—$C_{12}$ Arylen sein kann, oder $R_{21}$ eine Gruppe —E—CO—NH—$CH_2$—$OR_{20}$ ist.

11. Verfahren gemäss Anspruch 1, dadurch gekennzeichnet, dass die Tetramethylpiperidinverbindung eine Verbindung der Formel (IX) ist,

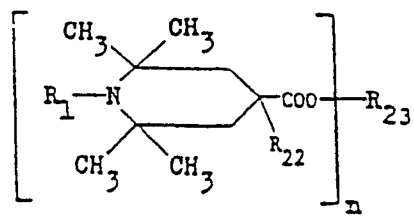

(IX)

worin n eine Zahl von 1 bis 4, vorzugsweise 1 oder 2 ist, $R_1$ die in Anspruch 3 angegebene Bedeutung hat, $R_{22}$ Wasserstoff, Hydroxyl oder $C_1$—$C_8$ Alkoxy ist und $R_{23}$, wenn n 1 ist, $C_1$—$C_{20}$ Alkyl $C_3$—$C_{14}$ Alkoxyalkyl, $C_5$—$C_{12}$ Cycloalkyl oder $C_7$—$C_{14}$ Aralkyl bedeutet, wenn n 2 ist, $C_2$—$C_{12}$ Alkylen, durch ein oder zwei —O— unterbrochenes $C_4$—$C_9$ Alkylen, $C_6$—$C_{12}$ Cycloalkylen, $C_8$—$C_{16}$ Cycloalkylen-dialkylen oder $C_8$—$C_{14}$ Aralkylen bedeutet, wenn n 3 ist, $C_3$—$C_{12}$ Alkantriyl bedeutet, und wenn n 4 ist, $C_4$—$C_{12}$ Alkantetrayl bedeutet.

12. Verfahren gemäss Anspruch 1, dadurch gekennzeichnet, dass die Tetramethylpiperidinverbindung eine polymere Verbindung ist, deren wiederkehrende Struktureinheit eine Gruppe der Formel (I) enthält.

13. Verfahren gemäss Anspruch 12, dadurch gekennzeichnet, dass die polymere Tetramethylpiperidinverbindung ein Polyester, Polyether, Polyamid, Polyamin, Polyurethan, Polyharnstoff, Polyaminotriazin, Poly(methy)acrylat, Poly(meth)acrylamid oder ein Copolymer davon ist.

14. Verfahren gemäss Anspruch 1, dadurch gekennzeichnet, dass die Tetramethylpiperidinverbindung eine Verbindung ist, die in ihrem Molekül mindestens eine 2-(2'-Hydroxyphenyl)-benztriazol-Gruppe oder 2-Hydroxybenzophenon-Gruppe und mindestens eine Tetramethylpiperidingruppe enthält.

15. Verfahren gemäss Anspruch 1, dadurch gekennzeichnet, dass die Tetramethylpiperidinverbindung Bis-(2,2,6,6-tetramethyl-4-piperidyl)-sebacat ist.

16. Verfahren gemäss Anspruch 1, dadurch gekennzeichnet, dass die Tetramethylpiperidinverbindung Bis-(1,2,2,6,6-pentamethyl-4-piperidyl)-sebacat ist.

17. Verfahren gemäss Anspruch 1, dadurch gekennzeichnet, dass der UV-Absorber eine Verbindung aus der Klasse der 2-(2'-Hydroxyphenyl)-benztriazole, 2,4-Bis(2'-hydroxyphenyl)-6-alkyl-s-triazine, 2-Hydroxybenzophenone, 1,3-Bis(2'-hydroxybenzoyl)-benzole, Benzoesäureester, Acrylate oder Oxalsäurediamide ist.

18. Verfahren gemäss Anspruch 17, dadurch gekennzeichnet, dass der UV-Absorber ein 2-(2'-Hydroxyphenyl)-benztriazol ist.

19. Verfahren gemäss Anspruch 18, dadurch gekennzeichnet, dass der UV-Absorber 2-(2'-Hydroxy-3',5'-di-tert.-amylphenyl)-benztriazol ist.

20. Verfahren gemäss Anspruch 1, dadurch gekennzeichnet, dass eine Mischung einer 2,2,6,6-Tetramethylpiperidinverbindung mit einem UV-Absorber im Verhältnis 16:1 bis 1:16 verwendet wird.

21. Verfahren gemäss Anspruch 20, dadurch gekennzeichnet, dass eine Mischung von Bis-(1,2,2,6,6-pentamethyl-4-piperidyl)-sebacat und 2-(2'-Hydroxy-3', 5'-di-tert.-amylphenyl)-benztriazol verwendet wird.

22. Verfahren gemäss Anspruch 1, dadurch gekennzeichnet, dass der Fungicid ein solches aus der Gruppe der Carbamate, chlorierten Phenole, nicht-phenolischen chlorierten organischen Verbindungen, Organozinnverbindungen, der organischen, Quecksilber-, Kupfer- oder Zinkverbindungen, Ketone oder Sulfone ist.

**Claims**

1. A method of stabilising fungicides against light-induced deterioration in wood protecting coatings, which comprises the addition of at least one 2,2,6,6-tetramethylpiperidine compound or of a mixture thereof with at least one UV absorber, with the proviso that the fungicide is not a fungicidal plasticiser and is not a 2,2,6,6-tetraalkylpiperidine compound.

2. A method according to claim 1, wherein the tetraalkylpiperidine compound is a compound which contains a group of formula (I)

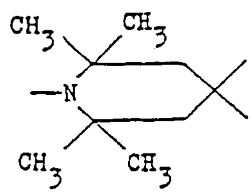

(I)

3. A method according to claim 1, wherein the tetramethylpiperidine compound is a compound of formula (II)

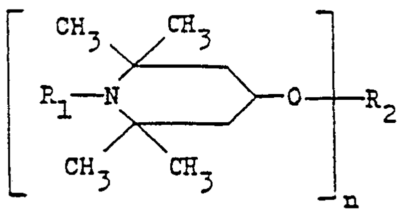

(II)

in which n is a value from 1 to 4, preferably 1 or 2, $R_1$ is hydrogen, oxyl, $C_1$—$C_{18}$ alkyl, $C_3$—$C_8$ alkenyl, $C_1$—$C_8$ alkynyl, $C_7$—$C_{12}$ aralkyl, $C_1$—$C_8$ alkanoyl, $C_3$—$C_5$ alkenoyl, glycidyl or a group —$CH_2$—CH(OH)—Z, wherein Z is hydrogen, methyl or phenyl, and, when n is 1, $R_2$ is hydrogen, $C_1$—$C_{18}$ alkyl which may be interrupted by one or more oxygens atoms, or is cyanoethyl, benzyl, glycidyl, a monovalent radical of an aliphatic, cycloaliphatic, araliphatic or aromatic carboxylic acid or of carbamic acid or of a phosphorus-containing acid, or a monovalent silyl radical, when n is 2, $R_2$ is $C_1$—$C_{12}$ alkylene, $C_4$—$C_{12}$ alkenylene, xylylene, a bivalent radical of an aliphatic, cycloaliphatic, araliphatic or aromatic dicarboxylic acid, of dicarbamic acid or of a phosphorus-containing acid, or a bivalent silyl radical, when n is 3, $R_2$ is a trivalent radical of an aliphatic, cycloaliphatic or aromatic tricarboxylic acid, of an aromatic tricarbamic acid or of a phosphorus-containing acid, or a trivalent silyl radical and, when n is 4, $R_2$ is a tetravalent radical of an aliphatic, cycloaliphatic or aromatic tetracarboxylic acid.

4. A method according to claim 3, which comprises the addition of a compound of formula (II), in which n is 1 or 2, $R_1$ is hydrogen, $C_1$—$C_{12}$ alkyl, allyl, benzyl, acetyl or acryloyl and, when n is 1, $R_2$ is a radical of an aliphatic carboxylic acid having 2 to 18 carbon atoms, of a cycloaliphatic carboxylic acid having 7 to 15 carbon atoms or of an aromatic carboxylic acid having 7 to 15 carbon atoms and, when n is 2, $R_2$ is a radical of an aliphatic dicarboxylic acid having 2 to 36 carbon atoms, of a cycloaliphatic or aromatic dicarboxylic acid having 8 to 14 carbon atoms, or of an aliphatic, cycloaliphatic or aromatic dicarbamic acid having 8 to 14 carbon atoms.

5. A method according to claim 1, wherein the tetramethylpiperidine compound is a compound of formula (III)

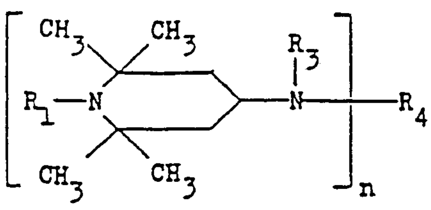

(III)

in which n is the value 1 or 2, $R_1$ is as defined in claim 3, $R_3$ is hydrogen, $C_1$—$C_{12}$ alkyl, $C_2$—$C_5$ hydroxyalkyl, $C_5$—$C_7$ cycloalkyl, $C_7$—$C_8$ aralkyl, $C_2$—$C_8$ alkanoyl, $C_3$—$C_5$ alkenoyl or benzoyl and, when n is 1, $R_4$ is

hydrogen, $C_1$—$C_{18}$ alkyl, $C_3$—$C_8$ alkenyl, $C_5$—$C_7$ cycloalkyl, $C_1$—$C_4$ alkyl which is substituted by a hydroxyl, cyano, alkoxycarbonyl or carbamide group, or it is glycidyl, a group of the formula —$CH_2$—CH(OH)—Z or of the formula —CONH—Z, wherein Z is hydrogen, methyl or phenyl, or, when n is 2, $R_4$ is $C_2$—$C_{12}$ alkylene, $C_6$—$C_{12}$ arylene, xylylene, a —$CH_2$—CH(OH)—$CH_2$— group or a group —$CH_2$—CH(OH)—$CH_2$—O—X—O—$CH_2$—CH(OH)—$CH_2$—, wherein X is $C_2$—$C_{10}$ alkylene, $C_6$—$C_{15}$ arylene or $C_6$—$C_{12}$ cycloalkylene, or, provided that $R_3$ is not alkanoyl, alkenoyl or benzoyl, $R_4$ can also be a bivalent radical of an aliphatic, cycloaliphatic or aromatic dicarboxylic acid or dicarbamic acid, or can also be the group —CO—, or, when n is 1, $R_3$ and $R_4$ together can be the cyclic radical of an aliphatic, cycloaliphatic or aromatic 1,2- or 1,3-dicarboxylic acid.

6. A method according to claim 1, wherein the tetramethylpiperidine compound is a compound of formula (IV)

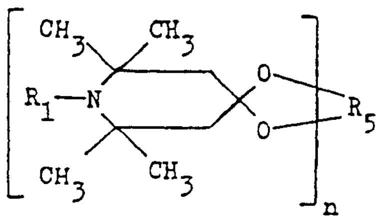

(IV)

in which n is the value 1 or 2, $R_1$ is as defined in claim 3 and, when n is 1, $R_5$ is $C_2$—$C_8$ alkylene or hydroxyalkylene or $C_4$—$C_{22}$ acyloxyalkylene, and, when n is 2, $R_5$ is the group $(—CH_2)_2C(CH_2—)_2$.

7. A method according to claim 1, wherein the tetramethylpiperidine compound is a compound of formula (VA), (VB) or (VC)

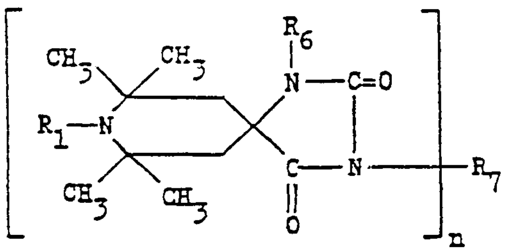

(VA)

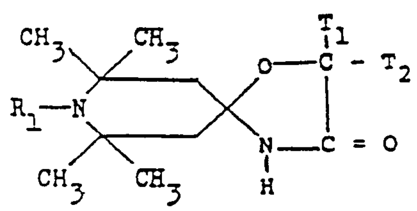

(VB)

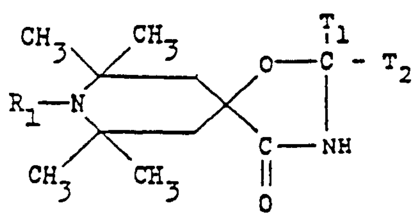

(VC)

in which formulae n is the value 1 or 2, $R_1$ is as defined in claim 3, $R_6$ is hydrogen, $C_1$—$C_{12}$ alkyl, allyl, benzyl, glycidyl or $C_2$—$C_6$ alkoxyalkyl and, when n is 1, $R_7$ is hydrogen, $C_1$—$C_{12}$ alkyl, $C_3$—$C_5$ alkenyl, $C_7$—$C_9$ aralkyl, $C_5$—$C_7$ cycloalkyl, $C_2$—$C_4$ hydroxyalkyl, $C_2$—$C_6$ alkoxyalkyl, $C_6$—$C_{10}$ aryl, glycidyl, a group of the formula —$(CH_2)$—COO—Q or of the formula —$(CH_2)_p$—O—CO—Q, wherein p is 1 or 2 and Q is $C_1$—$C_4$ alkyl or phenyl, or, when n is 2, $R_7$ is $C_2$—$C_{12}$-alkylene or $C_6$—$C_{12}$ arylene, a group —$CH_2$—CH(OH)—$CH_2$—O—X—O—$CH_2$—CH(OH)—$CH_2$—, wherein X is $C_2$—$C_{10}$ alkylene, $C_6$—$C_{15}$ arylene or $Cr_6$—$C_{12}$ cycloalkylene, or a group —$CH_2$CH(OZ')—$CH_2$—$(OCH_2$—$CH(OZ')CH_2)_2$—, wherein Z' is hydrogen, $C_1$—$C_{18}$ alkyl, allyl, benzyl, $C_2$—$C_{12}$ alkanoyl or benzoyl, each of $T_1$ and $T_2$ independently of the other is hydrogen, $C_1$—$C_{18}$ alkyl, or is $C_6$—$C_{10}$ aryl or $C_7$—$C_9$ aralkyl, each unsubstituted or substituted by halogen or $C_1$—$C_4$ alkyl, or $T_1$ and $T_2$, together with the carbon atom to which they are attached, form a $C_5$—$C_{12}$ cycloalkane ring.

8. A method according to claim 1, wherein the tetramethylpiperidine compound is a compound of formula (VI)

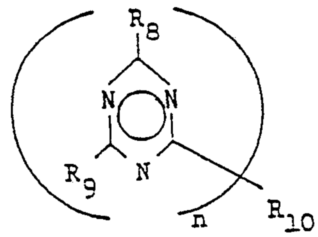

(VI)

in which n is the value 1 or 2, and $R_8$ is a group of the formula

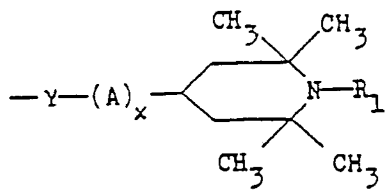

in which $R_1$ is as defined in claim 3, Y is —O— or —$NR_{11}$—, A is $C_2$—$C_6$-alkylene or —$(CH_2)_3$—O—, and x is the value 0 or 1, $R_9$ is the same as $R_8$ or is one of the groups $NR_{11}R_{12}$, —$OR_{13}$, —$NHCH_2OR_{13}$ or —$N(CH_2OR_{13})_2$, when n is 1, $R_{10}$ is the group $R_8$ or $R_9$ and, when n is 2, $R_{10}$ is the group —Y—B—Y—, wherein B is $C_2$—$C_6$ alkylene which may be interrupted by —$N(R_{11})$—, $R_{11}$ is $C_1$—$C_{12}$ alkyl, cyclohexyl, benzyl or $C_1$—$C_4$ hydroxyalkyl or a group of the formula

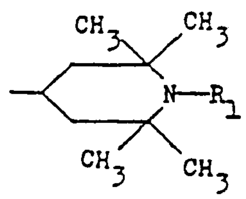

$R_{12}$ is $C_1$—$C_{12}$ alkyl, cyclohexyl, benzyl, $C_1$—$C_4$ hydroxyalkyl, $R_{13}$ is hydrogen, $C_1$—$C_{12}$ alkyl or phenyl or $R_{11}$ and $R_{12}$ together are $C_4$—$C_5$ alkylene or oxaalkylene or each of $R_{11}$ and $R_{12}$ is a group of the formula

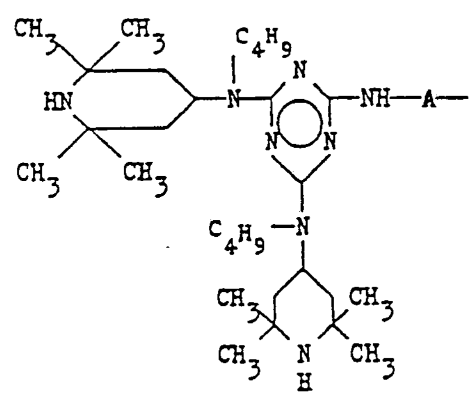

9. A method according to claim 1, wherein the tetramethylpiperidine compound is a compound of formula (VII)

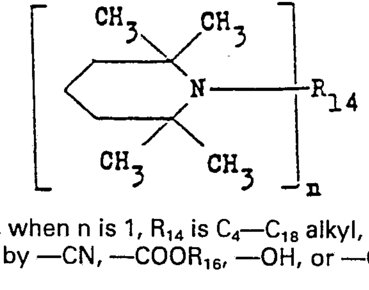

(VII)

in which n is the value 1 or 2 and, when n is 1, $R_{14}$ is $C_4$—$C_{18}$ alkyl, $C_7$—$C_{12}$ aralkyl, the group —CO—$R_{15}$, or $C_1$—$C_4$ alkyl which is substituted by —CN, —$COOR_{16}$, —OH, or —$OCOR_{17}$, or is —$CH_2$—CH(OH)—

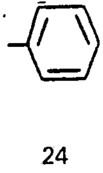

wherein $R_{15}$ is $C_1$—$C_{12}$ alkyl, $C_2$—$C_4$ alkenyl or phenyl, $R_{16}$ is $C_1$—$C_{18}$ alkyl, $R_{17}$ is $C_1$—$C_{18}$ alkyl, $C_2$—$C_{10}$ alkenyl, cyclohexyl, benzyl or $C_6$—$C_{10}$ aryl, or, when n is 2, $R_{14}$ is $C_4$—$C_{12}$ alkylene, 2-butenylene-1,4, xylylene, the group —$(CH_2)_2$—OOC—$R_{18}$—COO—$(CH_2)_2$— or the group —$CH_2$—OOC—$R_{19}$—COO—$CH_2$—, wherein $R_{18}$ is $C_2$—$C_{10}$ alkylene, phenylene or cyclohexylene and $R_{19}$ is $C_2$—$C_{10}$ alkylene, xylylene or cyclohexylene.

10. A method according to claim 1, wherein the tetraalkylpiperidine compound is a compound of formula (VIII)

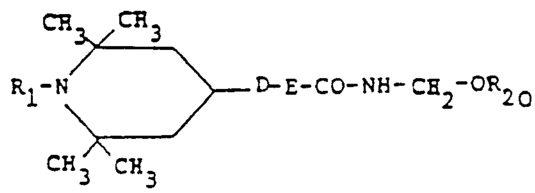

(VIII)

in which D is —N($R_{21}$)— or —O—; E is $C_1$—$C_3$ alkylene, the group —$CH_2$—CH(Z)—O—, wherein Z is hydrogen, methyl or phenyl, the group —$(CH_2)_3$—NH— or a single bond, $R_1$ is as defined in claim 3, $R_{20}$ is hydrogen or $C_1$—$C_{18}$ alkyl, $R_{21}$ is hydrogen, $C_1$—$C_{18}$ alkyl, $C_5$—$C_7$ cycloalkyl, $C_7$—$C_{12}$ aralkyl, cyanoethyl, $C_6$—$C_{10}$ aryl, the group —$CH_2$—CH(Z)—OH, a group of the formula

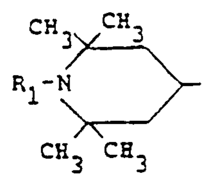

or a group of the formula

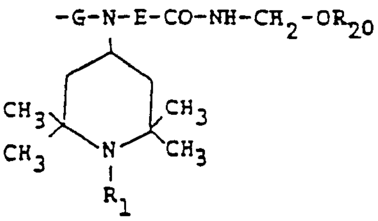

in which formulae Z is hydrogen, methyl or phenyl and G can be $C_2$—$C_6$ alkylene or $C_6$—$C_{12}$ arylene, or $R_{21}$ is a group —E—CO—NH—$CH_2$—$OR_{20}$.

11. A method according to claim 1, wherein the tetraalkylpiperidine compound is a compound of formula (IX)

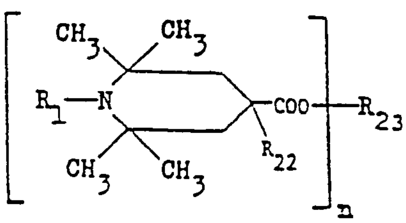

(IX)

in which n is a value from 1 to 4, preferably 1 or 2, $R_1$ is as defined in claim 3, $R_{22}$ is hydrogen, hydroxy or $C_1$—$C_8$-alkoxy and, when n is 1, $R_{23}$ is $C_1$—$C_{20}$ alkyl, $C_3$—$C_{14}$alkoxyalkyl, $C_5$—$C_{12}$cycloalkyl or $C_7$—$C_{14}$aralkyl, when n is 2, $R_{23}$ is $C_2$—$C_{12}$ alkylene, or is $C_4$—$C_9$ alkylene, $C_6$—$C_{12}$ cycloalkylene, $C_8$—$C_{16}$-cycloalkylene dialkylene or $C_8$—$C_{14}$ aralkylene, each interrupted by one or two —O— atoms, when n is 3, $R_{23}$ is $C_3$—$C_{12}$alkanetriyl and when n is 4, $R_{23}$ is $C_4$—$C_{12}$alkanetetrayl.

12. A method according to claim 1, wherein the tetramethylpiperidine compound is a polymeric compound, the recurring structural element of which contains a group of formula (I).

13. A method according to claim 11, wherein the polymeric tetramethylpiperidine compound is a polyester, polyether, polyamide, polyamine, polyurethane, polyurea, polyaminotriazine, polyacrylate, polymethacrylate, polyacrylamide or polymethyacrylamide or a copolymer thereof.

14. A method according to claim 1, wherein the tetramethylpiperidine compound is a compound which contains in its molecule at least one 2-(2'-hydroxyphenyl)benzotriazole group or 2-hydroxybenzophenone group and at least one tetramethylpiperidine group.

15. A method according to claim 1, wherein the tetramethylpiperidine compound is bis(2,2,6,6-tetramethyl-4-piperidyl)sebacate.

16. A method according to claim 1, wherein the tetramethylpiperidine compound is bis(1,2,2,6,6-pentamethyl-4-piperidyl)sebacate.

17. A method according to claim 1, wherein the UV absorber is a compound selected from the group consisting of 2-(2'-hydroxyphenyl)benzotriazoles, 2,4-bis(2'-hydroxyphenyl)-6-alkyl-s-triazines, 2-hydroxybenzophenones, 1,3-bis(2'-hydroxybenzoyl)benzenes, esters of benzoic acid, acrylates and oxalic acid diamides.

18. A method according to claim 17, wherein the UV absorber is a 2-(2'-hydroxyphenyl)benzotriazole.

19. A method according to claim 18, wherein the UV absorber is 2-(2'-hydroxy-3',5'-di-tert-amylphenyl)benzotriazole.

20. A method according to claim 1, which comprises the use of a mixture of a 2,2,6,6-tetramethylpiperidine compound with a UV absorber in a ratio in the range from 16:1 to 1:16.

21. A method according to claim 20, which comprises the use of a mixture of bis(1,2,2,6,6-pentamethyl-4-piperidyl)sebacate and 2-(2'-hydroxy-3',5'-di-tert-amylphenyl)benzotriazole.

22. A method according to claim 1, wherein the fungicide is selected from the group consisting of carbamates, chlorinated phenols, non-phenolic chlorinated organic compounds, organic tin, mercury, copper and zinc compounds, ketones and sulfones.

## Revendications

1. Procédé pour stabiliser des fongicides contenus dans des vernis de protection pour bois contre la dégradation par la lumière, procédé selon lequel on leur ajoute au moins un composé tétraméthyl-2,2,6,6-pipéridinique ou un mélange d'un tel composé avec au moins un absorbeur de rayons ultra-violets, le fongicide n'étant ni un adoucissant fongicide, ni un derivé de tetra-alkyl-2,2,6,6-pipéridine.

2. Procédé selon la revendication 1, caractérisé en ce que le composé tétraméthylpipéridinique est un composé qui contient un radical répondant à la formule I:

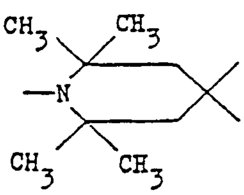

(I)

3. Procédé selon la revendication 1 caractérisé en ce que le composé tétraméthylpipéridinique est un composé répondant à la formule II:

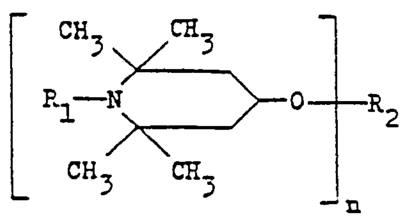

(II)

dans laquelle n représente un nombre de 1 à 4, de préférence 1 ou 2, $R_1$ représente l'hydrogène, un oxyle, un alkyle en $C_1$—$C_{18}$, un alcényle en $C_3$—$C_8$, un alcinyle en $C_3$—$C_8$, un aralkyle en $C_7$—$C_{12}$, un alcanoyle en $C_1$—$C_8$, un alcénoyle en $C_3$—$C_5$, un glycidyle ou un radical —$CH_2CH(OH)$—Z dans lequel Z désigne l'hydrogène, un méthyle ou un phényle, et $R_2$ représente: lorsque n est égal à 1, l'hydrogène, un alkyle en $C_1$—$C_{18}$ éventuellement interrompu par un ou plusieurs atomes d'oxygène, un cyanétyle, un benzyle, un glycidyle, un radical univalent d'un acide carboxylique, aliphatique, cycloaliphatique, araliphatique ou aromatique, d'un acide carbamique ou d'un acide contenant du phosphore, ou un radical silyle univalent, lorsque n est égal à 2, un alkylène en $C_1$—$C_{12}$, un alcénylène en $C_4$—$C_{12}$, un xylylène, un radical bivalent d'un acide dicarboxylique, aliphatique, cycloaliphatique, araliphatique ou aromatique, d'un acide dicarbamique ou d'un acide contenant du phosphore, ou un radical silyle bivalent, lorsque n est égal à 3, un radical trivalent d'un acide tricarboxylique, aliphatique, cycloaliphatique ou aromatique, d'un acide tricarbamique aromatique ou d'un acide contenant du phosphore, ou un radical silyle trivalent, et lorsque n est égal à 4, un radical quadrivalent d'un acide tétracarboxylique aliphatique, cycloaliphatique ou aromatique.

4. Procédé selon la revendication 3, selon lequel on ajoute un composé de formule II dans lequel n est égal à 1 ou à 2, $R_1$ représente l'hydrogène, un alkyle en $C_1$—$C_{12}$, un allyle, un benzyle, un acétyle ou un acryloyle, et $R_2$ lorsque n est égal à 1, représente un radical d'un acide carboxylique aliphatique en $C_2$—$C_{18}$, d'un acide carboxylique cycloaliphatique en $C_7$—$C_{15}$ ou d'un acide carboxylique aromatique en $C_7$—$C_{15}$, et,

lorsque n est égal à 2, un radical d'un acide dicarboxylique aliphatique contenant de 2 à 36 atomes de carbone, d'un acide dicarboxylique cycloaliphatique ou aromatique contenant de 8 à 14 atomes de carbone ou d'un acide dicarbamique aliphatique, cycloaliphatique ou aromatique contenant de 8 à 14 atomes de carbone.

5. Procédé selon la revendication 1, caractérisée en ce que le composé tétraméthyl-pipéridinique est un composé répondant à la formule III:

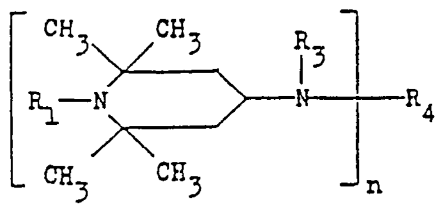

(III)

dans laquelle n désigne le nombre 1 ou le nombre 2, $R_1$ a les significations qui ont été données à la revendication 3, $R_3$ représente l'hydrogène, un alkyle en $C_1$—$C_{12}$, un hydroxyalkyle en $C_2$—$C_5$, un cycloalkyle en $C_5$—$C_7$, un aralkyle en $C_7$ ou $C_8$, un alcanoyle en $C_2$—$C_{18}$, un alcénoyle en $C_3$—$C_5$ ou un benzoyle, et $R_4$ représente: lorsque n est égal à 1, l'hydrogène, un alkyle en $C_1$—$C_{18}$, un alcényle en $C_3$—$C_8$, un cycloalkyle en $C_5$—$C_7$, un alkyle en $C_1$—$C_4$ porteur d'un hydroxy, d'un cyano, d'un alcoxycarbonyle ou d'un carbamoyle, un glycidyle, un radical $—CH_2—CH(OH)—Z$ ou $—CONH—Z$ dans lequel Z est l'hydrogène, un méthyle ou un phényle, et lorsque n est égal à 2, un alkylène en $C_2$—$C_{12}$, un arylène en $C_6$—$C_{12}$, un xylylène, un radical $—CH_2—CH(OH)—CH_2—$ ou un radical $—CH_2—CH(OH)—CH_2—O—X—O—CH_2—$ dans lequel X représente un alkylène en $C_2$—$C_{10}$, un arylène en $C_6$—$C_{15}$ ou un cycloalkylène en $C_6$—$C_{12}$, ou, dans la mesure où $R_3$ n'est ni un alcanoyle, ni un alcénoyle ni un benzoyle, $R_4$ peut également représenter un radical bivalent d'un acide carboxylique aliphatique, cycloaliphatique ou aromatique ou d'un acide dicarbamique ou encore le radical —CO—, ou $R_3$ et $R_4$ forment ensemble, lorsque n est égal à 1, un radical bivalent d'un acide dicarboxylique-1,2 ou -1,3 aliphatique, cycloaliphatique ou aromatique.

6. Procédé selon la revendication 1, caractérisé en ce que le composé tétraméthylpipéridinique est un composé répondant à la formule IV:

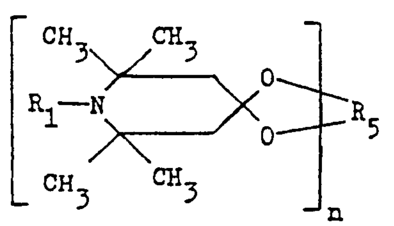

(IV)

dans laquelle n représente le nombre 1 ou le nombre 2, $R_1$ a les significations données à la revendication 3, et $R_5$ représente, lorsque n est égal à 1, un radical alkylène ou hydroxyalkylène en $C_2$—$C_8$, ou un acyloxyalkylène en $C_4$—$C_{22}$ et, lorsque n est égal à 2, un radical $(—CH_2)_2C(CH_2—)_2$.

7. Procédé selon la revendication 1 caractérisé en ce que le composé tétraméthylpipéridinique est un composé répondant à l'une des formules VA, VB et VC:

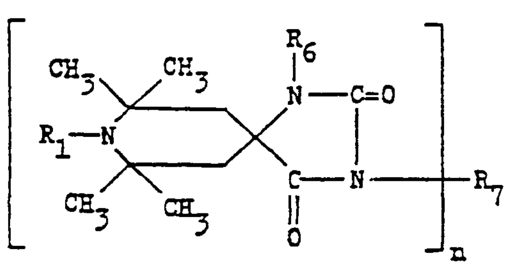

(VA)

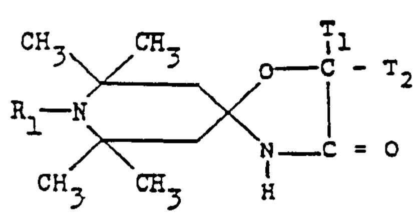

(VB)

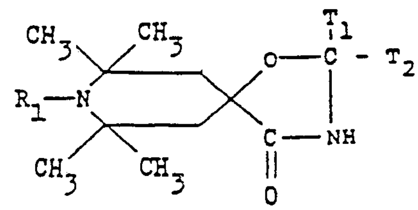

(VC)

dans lesquelles n désigne le nombre 1 ou le nombre 2, $R_1$ a les significations données à la revendication 3, $R_6$ représente l'hydrogène, un alkyle en $C_1$—$C_{12}$, un allyle, un benzyle, un glycidyle ou un alcoxy-alkyle en $C_2$—$C_6$, $R_7$ représente: lorsque n est égal à 1, l'hydrogène, un alkyle en $C_1$—$C_{12}$, un alcényle en $C_3$—$C_5$, un aralkyle en $C_7$—$C_9$, un cycloalkyle en $C_5$—$C_7$, un hydroxyalkyle en $C_2$—$C_4$, un alcoxyalkyle en $C_2$—$C_6$, un aryle en $C_6$—$C_{12}$, un glycidyle ou un radical répondant à l'une des formules $-(CH_2)_p-COO-Q$ et $-(CH_2)_p-O-CO-Q$ dans lesquelles p est égal à 1 ou à 2 et Q représente un alkyle en $C_1$—$C_4$ ou un phényle, et lorsque n est égal à 2, un alkylène en $C_1$—$C_{12}$, un arylène en $C_6$—$C_{12}$, un radical $-CH_2-CH(OH)-CH_2-O-X-O-CH_2-CH(OH)-CH_2-$ (dans laquelle X représente un alkylène en $C_2$—$C_{10}$, un arylène en $C_6$—$C_{15}$ ou un cycloalkylène en $C_6$—$C_{12}$) ou un radical $-CH_2CH(OZ')CH_2-(OCH_2-CH(OZ')CH_2)_2-$ (dans laquelle Z' représente l'hydrogène, un alkyle en $C_1$—$C_{18}$, un allyle, un benzyle, un alcanoyle en $C_2$—$C_{12}$ ou un benzoyle), et $T_1$ et $T_2$ représentent chacun, indépendamment l'un de l'autre, l'hydrogène, un alkyle en $C_1$—$C_{18}$ ou un radical aryle en $C_6$—$C_{10}$ ou aralkyle en $C_7$—$C_9$ éventuellement porteur d'un halogène ou d'un alkyle en $C_1$—$C_4$, ou forment ensemble, et avec l'atome de carbone qui les unit, un noyau de cycloalcane en $C_5$—$C_{12}$.

8. Procédé selon la revendication 1 caractérisé en ce que le composé tétraméthylpipéridinique est un composé répondant à la formule VI:

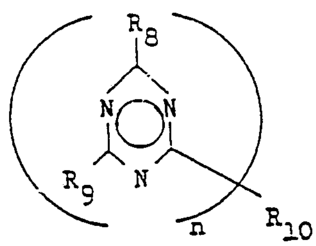

(VI)

dans laquelle n désigne le nombre 1 ou le nombre 2, $R_8$ représente un radical répondant à la formule suivante:

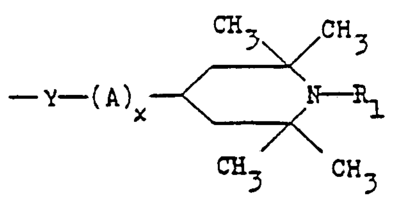

dans laquelle $R_1$ a les significations données à la revendication 3, Y représente —O— ou $-NR_{11}-$,

A représente un alkylène en $C_2$—$C_6$ ou un radical $-(CH_2)_3-O-$, et x, le nombre 0 ou 1), $R_9$ a la signification qui a été donnée pour $R_8$ ou représente un radical $-NR_{11}R_{12}$, $-OR_{13}$, $-NHCH_2OR_{13}$ ou $-N(CH_2OR_{13})_2$, $R_{10}$ représente, lorsque n est égal à 1, un radical $R_8$ ou $R_9$ et, lorsque n est égal à 2, un radical —Y—B—Y dans lequel B représente un alkylène en $C_2$—$C_6$ éventuellement interrompu $-N(R_{11})-$, $R_{11}$ représente un alkyle en $C_1$—$C_{12}$, un cyclohexyle, un benzyle, un hydroxyalkyle en $C_1$—$C_4$ ou un radical de formule:

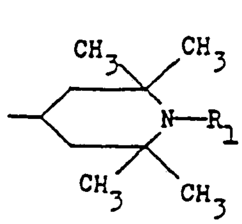

$R_{12}$ représente un alkyle en $C_1$—$C_{12}$, un cyclohexyle, un benzyle ou un hydroxyalkyle en $C_1$—$C_4$, et $R_{13}$ représente l'hydrogène, un alkyle en $C_1$—$C_{12}$ ou un phényle, ou un phényle, ou $R_{11}$ et $R_{12}$ forment ensemble un alkylène ou un oxa-alkylène à 4 ou 5 maillons, ou encore $R_{11}$ et $R_{12}$ représentent chacun un radical de formule:

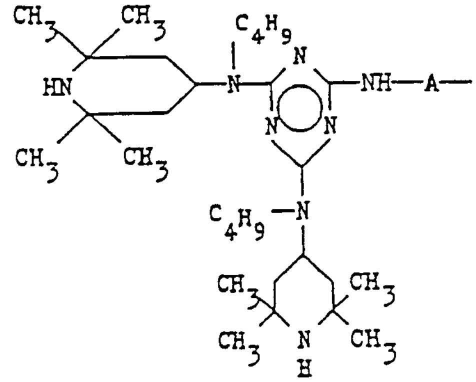

9. Procédé selon la revendication 1 caractérisé en ce que le composé tétraméthyl-pipéridinique est un composé répondant à la formule VII:

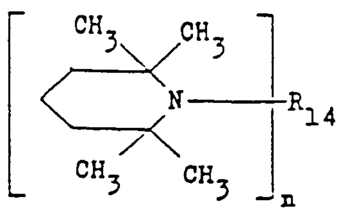

(VII)

dans laquelle n représente le nombre 1 ou le nombre 2 et $R_{14}$ représente: lorsque n est égal à 1, un alkyle en $C_4$—$C_{18}$, un aralkyle en $C_7$—$C_{12}$, un radical —CO—$R_{15}$, un alkyle en $C_1$—$C_4$ porteur d'un radical —CN, —$COOR_{16}$, —OH ou —$OCOR_{17}$, ou un radical —$CH_2$—CH(OH)—

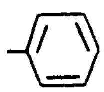

le symbole $R_{15}$ désignant un alkyle en $C_1$—$C_{12}$, un alcényle en $C_2$—$C_4$, ou un phényle, $R_{16}$ un alkyle en $C_1$—$C_{18}$, $R_{17}$ un alkyle en $C_1$—$C_{18}$, un alcényle en $C_2$—$C_{10}$, un cyclohexyle, un benzyle ou un aryle en $C_6$—$C_{10}$, et lorsque n est égal 2, un alkylène en $C_4$—$C_{12}$, un butène-2-ylène-1,4, un xylylène, un radical —$(CH_2)_2$—OOC—$R_{18}$—COO—$(CH_2)_2$— ou un radical —$CH_2$—OOC—$R_{19}$—COO—$CH_2$—, radicaux dans lesquels $R_{18}$ représente un alkylène en $C_2$—$C_{18}$, un phénylène ou un cyclohexylène et $R_{19}$ un alkylène en $C_2$—$C_{10}$, un xylylène ou un cyclohexylène.

10. Procédé selon la revendication 1 caractérisé en ce que le composé tétraméthyl-pipéridinique est un composé répondant à la formule VIII:

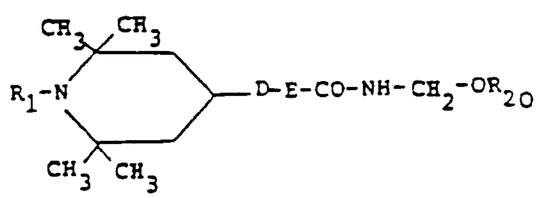

(VIII)

dans laquelle D représente —N($R_{21}$)— ou —O—, E représente un alkylène en $C_1$—$C_3$, un radical —$CH_2$—CH(Z)—O—, dans lequel Z représente l'hydrogène, un méthyle ou un phényle, un radical —$(CH_2)_3$—NH— ou une liaison simple, $R_1$ a les significations données à la revendication 3 et $R_{20}$ représente l'hydrogène ou un alkyle en $C_1$—$C_{18}$, $R_{21}$ représentant l'hydrogène, un alkyle en $C_1$—$C_{18}$, un cycloalkyle en $C_5$—$C_7$, un aralkyle en $C_7$—$C_{12}$, un cyanétyle, un aryle en $C_6$—$C_{10}$, un radical —$CH_2$—CH(Z)—OH, un radical de formule:

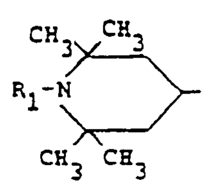

ou un radical de formule

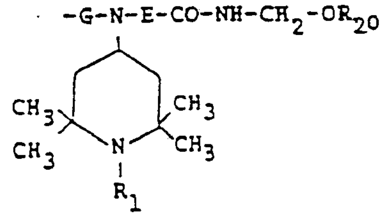

Z représentant l'hydrogène, un méthyle ou un phényle et G un alkylène en $C_2$—$C_6$ ou un arylène en $C_6$—$C_{12}$, ou encore $R_{21}$ étant un radical —E—CO—NH—$CH_2$—$OR_{20}$.

11. Procédé selon la revendication 1 caractérisé en ce que le composé tétraméthylpipéridinique est un composé répondant à la formule IX:

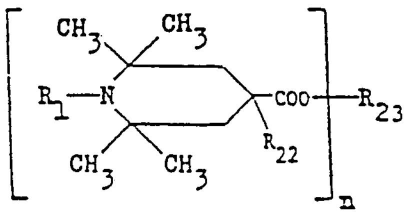

(IX)

dans laquelle n désigne un nombre de 1 à 4, de préférence 1 ou 2, $R_1$ a les significations données à la revendication 3, $R_{22}$ représente l'hydrogène, un hydroxy ou un alcoxy en $C_1$—$C_8$ et $R_{23}$ représente, lorsque n est égal à 1, un alkyle en $C_1$—$C_{20}$, un alcoxyalkyle en $C_3$—$C_{14}$, un cycloalkyle en $C_5$—$C_{12}$ ou un aralkyle en $C_7$—$C_{14}$, lorsque n est égal à 2, un alkylène en $C_2$—$C_{12}$, un alkylène en $C_4$—$C_9$ interrompu par un ou deux —O—, un cycloalkylène en $C_6$—$C_{12}$, un cycloalkylène-dialkylène en $C_8$—$C_{16}$ ou un aralkylène en $C_8$—$C_{14}$, lorsque n est égal à 3, un alcane-triyle en $C_3$—$C_{12}$ et lorsque n est égal à 4, un alcane-tétrayle en $C_4$—$C_{12}$.

12. Procédé selon la revendication 1 caractérisé en ce que le composé tétraméthyl-pipéridinique est un composé polymère dont le motif contient un radical de formule I.

13. Procédé selon la revendication 12, caractérisé en ce que le composé tétraméthyl-pipéridinique polymère est un polyester, un polyéther, un polyamide, une polyamine, un polyuréthanne, une polyurée, une poly(aminotriazine), un polyacrylate, un polyméthacrylate, un polyacrylamide, un polyméthacrylamide ou un copolymère de ceux-ci.

14. Procédé selon la revendication 1, caractérisé en ce que le composé tétraméthyl-pipéridinique est un composé dont la molécule contient au moins un radical d'(hydroxy-2-phényl)-2 benzotriazole ou un radical d'hydroxy-2 benzophénone et au moins un radical tétraméthyl-pipéridinique.

15. Procédé selon la revendication 1, caractérisé en ce que le composé tétraméthyl-pipéridinique est le sébaçate de bis-(tétraméthyl-2,6,6-pipéridyle)-4.

16. Procédé selon la revendication 1, caractérisé en ce que le composé tétraméthyl-pipéridinique est le sébaçate de bis-(pentaméthyl-1,2,2,6,6-pipéridyle)-4.

17. Procédé selon la revendication 1, caractérisé en ce que l'absorbeur de rayons ultra-violet est un composé appartenant à l'ensemble des (hydroxy-2 phényl)-2 benzotriazoles, des bis-(hydroxy-2 phényl)-2,4 alkyl-6 triazines-1,3,5 des hydroxy-2 benzophénones, des bis-(hydroxy-2 benzoyl)-1,3 benzènes, des esters benzoïques, des acrylates ou des oxalamides.

18. Procédé selon la revendication 17, caractérisé en ce que l'absorbeur des rayons ultra-violet est un (hydroxy-2 phényl)-2 benzotriazole.

19. Procédé selon la revendication 18, caractérisé en ce que l'absorbeur de rayons ultra-violet est l'(hydroxy-2-ditert-pentyl-3,5 phényl)-2 benzotriazole.

20. Procédé selon la revendication 1, caractérisé en ce qu'on utilise un mélange d'un composé tétraméthyl-2,2,6,6 pipéridinique et d'un absorbeur de rayons ultra-violet dans un rapport compris entre 16:1 et 1:16.

21. Procédé selon la revendication 20, caractérisé en ce qu'on utilise un mélange de sébaçate de bis-(pentaméthyl-1,2,2,6,6 pipéridyle)-4 et d'(hydroxy-2 di-tert-pentyl-3,5 phényl)-2 benzotriazole.

22. Procédé selon la revendication 1, caractérisé en ce que le fongicide appartient à l'ensemble des carbamates, des phénols chlorés, des composés non phénoliques chlorés, des composés organostanniques, des composés organiques du mercure, du cuivre ou du zinc, des cétones ou des sulfones.